# EUROPEAN PATENT APPLICATION

(11) **EP 4 175 001 A1**
(43) Date of publication of application: **03.05.2023**
(21) Application number: 21828797.7
(22) Date of filing: 25.06.2021
(51) Int. Cl.: H01M 10/0567, H01M 10/052

(54) **NONAQUEOUS ELECTROLYTIC SOLUTION AND NONAQUEOUS ELECTROLYTIC SOLUTION BATTERY**

(30) Priority: 26.06.2020 JP 2020110437
(71) Applicant: Mitsubishi Chemical Corporation, Chiyoda-ku Tokyo 100-8251 (JP); MU Ionic Solutions Corporation, Tokyo 100-8251 (JP)
(72) Inventor: NAKAZAWA, Eiji, Tokyo 100-8251 (JP); ABE, Taiki, Tokyo 100-8251 (JP)
(74) Representative: Hoffmann Eitle
(86) International application number: PCT/JP2021/024118
(87) International publication number: WO 2021/261579

(57) **Abstract**

Provided is a nonaqueous electrolytic solution for a nonaqueous electrolytic solution battery including a positive electrode and a negative electrode that are capable of occluding and releasing metal ions. The nonaqueous electrolytic solution is characterized by containing a compound represented by Formula (A) and a compound represented by Formula (α) along with an alkali metal salt and a nonaqueous solvent.

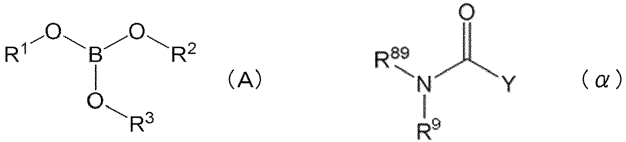

## Description

### TECHNICAL FIELD

The present invention relates to a nonaqueous electrolytic solution and a nonaqueous electrolytic solution battery. More particularly, the present invention relates to: a nonaqueous electrolytic solution containing specific compounds; and a nonaqueous electrolytic solution battery including the nonaqueous electrolytic solution.

### BACKGROUND ART

Nonaqueous electrolytic solution batteries such as lithium secondary batteries have been put into practical use in a wide range of applications including power sources for so-called consumer small hardware, for example, portable phones such as smartphones and laptop computers, as well as vehicle-mounted power sources for driving electric vehicles and the like.

As means for improving the properties of a nonaqueous electrolytic solution battery, numerous studies have been conducted in the fields of the active materials of positive and negative electrodes as well as the additives of nonaqueous electrolytic solutions.

For example, Patent Document 1 discloses a study where an increase in the resistance during high-temperature storage is improved by an addition of fluoroethylene carbonate, methyl 3,3,3-trifluoropropionate, and a boric acid ester having a specific structure to a nonaqueous electrolytic solution.

Patent Document 2 discloses a study where the battery characteristics, such as inhibition of an increase in the interface resistance during initial charging and inhibition of an increase in the interface resistance after high-temperature storage, are improved by an addition of a boric acid ester having a specific structure to a nonaqueous electrolytic solution.

### RELATED ART DOCUMENTS

### PATENT DOCUMENTS

[Patent Document 1] Japanese Unexamined Patent Application Publication No. 2017-168375
[Patent Document 2] Japanese Unexamined Patent Application Publication No. 2003-132946

### SUMMARY OF THE INVENTION

### PROBLEMS TO BE SOLVED BY THE INVENTION

In recent years, improvement in the capacities of lithium batteries has been accelerated for, for example, power sources to be mounted on electric vehicles and power sources for portable phones such as smart phones, and the ratio of voids inside these batteries has been reduced as compared to before. Therefore, the generation of a large amount of gas during initial conditioning is a crucial drawback.

The effects disclosed in Patent Documents 1 and 2 can be obtained by using the electrolytic solutions described in these Patent Documents; however, there is room for improvement in terms of the generation of gas during initial conditioning.

An object of the present invention is to provide a nonaqueous electrolytic solution which can inhibit the generation of gas during initial conditioning of a nonaqueous electrolytic solution battery. Another object of the present invention is to provide a nonaqueous electrolytic solution battery in which the generation of gas during initial conditioning is inhibited.

### MEANS FOR SOLVING THE PROBLEMS

The present inventors intensively studied to solve the above-described problems consequently arrived at inhibiting the generation of gas during initial conditioning by using a nonaqueous electrolytic solution containing a compound represented by Formula (A) and a silicon compound represented by Formula (α), thereby completing the present invention.
[1] A nonaqueous electrolytic solution for a nonaqueous electrolytic solution battery including a positive electrode and a negative electrode that are capable of occluding and releasing metal ions,
   wherein the nonaqueous electrolytic solution contains a compound represented by Formula (A) and a compound represented by Formula (α) along with an alkali metal salt and a nonaqueous solvent: 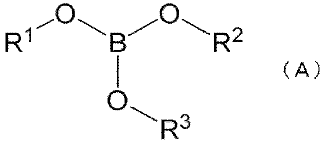 (wherein, R¹ to R³ each independently represent a hydrocarbon group having 1 to 10 carbon atoms and optionally having a heteroatom, or a trialkylsilyl group; and R¹ to R³ are optionally bound to each other to form a ring) 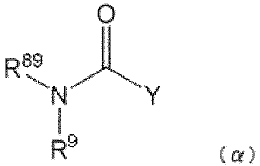
   (wherein, R⁸⁹ represents a hydrogen atom or a silyl group represented by -SiR⁶R⁷R⁸; R⁶ to R⁸ each independently represent a hydrogen atom, a halogen atom, a hydrocarbon group having 1 to 12 carbon atoms and optionally having a substituent, or an alkoxy group having 1 to 12 carbon atoms and optionally having a substituent; R⁹ represents a hydrogen atom, a hydrocarbon group having 1 to 12 carbon atoms and optionally having a substituent, or a silyl group represented by -SiR^{d}R^{e}R^{f}; R^{d} to R^{f} each independently represent a hydrogen atom, a halogen atom, a hydrocarbon group having 1 to 12 carbon atoms and optionally having a substituent, or an alkoxy group having 1 to 12 carbon atoms and optionally having a substituent; Y represents a hydrogen atom, a halogen atom, a hydrocarbon group having 1 to 12 carbon atoms and optionally having a substituent, an alkoxy group having 1 to 12 carbon atoms and optionally having a substituent, a group represented by -NR^{g}-SiR^{h}RⁱR^{j}, or a group represented by -NR^{g}-H; R^{g} represents a hydrogen atom, or a hydrocarbon group having 1 to 12 carbon atoms and optionally having a substituent; R^{h} to R^{j} each independently represent a hydrogen atom, a halogen atom, a hydrocarbon group having 1 to 12 carbon atoms and optionally having a substituent, or an alkoxy group having 1 to 12 carbon atoms and optionally having a substituent; and R⁹ and R^{g} are optionally bound to each other to form a ring).
[2] The nonaqueous electrolytic solution according to [1], wherein the content of the compound represented by Formula (A) is 1.0 × 10⁻³% by mass to 10% by mass with respect to a total amount of the nonaqueous electrolytic solution.
[3] The nonaqueous electrolytic solution according to [1] or [2], wherein the content of the compound represented by Formula (α) is 0.01 ppm by mass to 0.5% by mass with respect to a total amount of the nonaqueous electrolytic solution.
[4] The nonaqueous electrolytic solution according to any one of [1] to [3], wherein a mass ratio of the content of the compound represented by Formula (A) with respect to the content of the compound represented by Formula (α) in the nonaqueous electrolytic solution is 1.0 to 10,000.
[5] The nonaqueous electrolytic solution according to any one of [1] to [6], wherein the compound represented by Formula (A) is a compound represented by Formula (A') or a compound represented by Formula (A"): 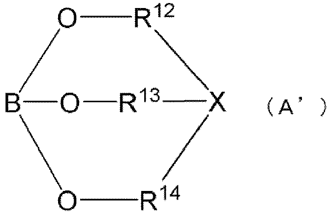
   (wherein, R¹² to R¹⁴ each independently represent an alkylene group having 1 to 10 carbon atoms and optionally having a substituent; and X^{a} represents an at least trivalent or pentavalent heteroatom) 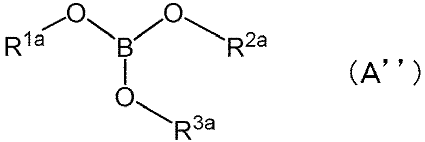
   (wherein, R^{1a} to R^{3a} each independently represent a hydrocarbon group having 1 to 10 carbon atoms and optionally having a heteroatom, or a trialkylsilyl group optionally having a substituent; and at least one of R^{1a} to R^{3a} is a heteroatom-containing hydrocarbon group having 1 to 10 carbon atoms, or a trialkylsilyl group optionally having a substituent) .
[6] The nonaqueous electrolytic solution according to any one of [1] to [5], wherein the compound represented by Formula (A) is triethanolamine borate or tris(trimethylsilyl) borate.
[7] A nonaqueous electrolytic solution battery, including: a positive electrode; a negative electrode; and a nonaqueous electrolytic solution,
   wherein the nonaqueous electrolytic solution is the nonaqueous electrolytic solution according to any one of [1] to [6] .

### EFFECTS OF THE INVENTION

According to the present invention, a nonaqueous electrolytic solution that is excellent in inhibiting the generation of gas during initial conditioning of a nonaqueous electrolytic solution battery, and a nonaqueous electrolytic solution battery in which the generation of gas during initial conditioning is inhibited can be obtained.

### MODE FOR CARRYING OUT THE INVENTION

Embodiments of the present invention will now be described in detail. The below-described embodiments are merely examples (representative examples) of the present invention, and the present invention is not limited thereto. Further, modifications can be arbitrarily made to carry out the present invention, without departing from the gist of the present invention.

### <1. Nonaqueous Electrolytic Solution>

The nonaqueous electrolytic solution according to one embodiment of the present invention contains the below-described B-O structure-containing compound represented by Formula (A) and the below-described compound represented by Formula (α). This nonaqueous electrolytic solution is preferably used as a nonaqueous electrolytic solution for the below-described nonaqueous electrolytic solution battery including a positive electrode and a negative electrode that are capable of occluding and releasing metal ions.

The mechanism in which the generation of gas during initial conditioning is inhibited by using a nonaqueous electrolytic solution that contains a B-O structure-containing compound represented by Formula (A) and a compound represented by Formula (α) is not clear; however, it is presumed as follows.

The compound represented by Formula (A) has polar structures (-B-O-) in its molecule. Therefore, the compound represented by Formula (A) tends to interact with the surface of a negative electrode active material such as carbon and/or the surface of a positive electrode active material such as a transition metal oxide, and be thereby localized in the vicinity of these surface(s). In addition, the compound represented by Formula (α) has a non-polar structure (-SiR⁶R⁷R⁸) and/or a polar structure (-NH- or -N-(C=O)-). A silicon atom generally has a broad electron cloud distribution and exhibits no steric hindrance in the formation of a bond; therefore, a silicon atom readily forms a bond with a n-electron or an unpaired electron through a vacant d orbital. The boron compound represented by Formula (A) also has a vacant orbital and can thus readily interacts with a polar structure. Further, when Formula (α) has a -NH- structure, it can interact with a -B-O- moiety of the compound represented by Formula (A) through hydrogen bonding. Therefore, the compound represented by Formula (A), which is localized on the active material surface, interacts with the compound represented by Formula (α), whereby fixation of these compounds onto an electrode is facilitated.

As a result, the compound represented by Formula (α) and the compound represented by Formula (A) are electrochemically decomposed during initial charging to form a composite insulating coating film. This composite coating film is presumed to inhibit side reactions of the electrolytic solution during initial conditioning and thereby reduce the amount of gas generation.

### <1-1. Compound Represented by Formula (A)>

The nonaqueous electrolytic solution according to one embodiment of the present invention is characterized by containing a B-O structure-containing compound represented by the following Formula (A).

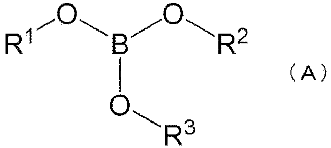

In Formula (A), R¹ to R³ each independently represent a hydrocarbon group having 1 to 10 carbon atoms and optionally having a heteroatom, or a trialkylsilyl group optionally having a substituent; and R¹ to R³ are optionally bound to each other to form a ring.

R¹ to R³ according to Formula (A) each independently represent a hydrocarbon group having 1 to 10 carbon atoms and optionally having a heteroatom, or a trialkylsilyl group optionally having a substituent. Between these groups, a trialkylsilyl group optionally having a substituent is preferred since it can interact with the compound represented by Formula (α) in a preferred manner.

It is noted here that, when the hydrocarbon group has a substituent, the number of carbon atoms contained in the substituent is not included in the number of carbon atoms of the hydrocarbon group. A "hydrocarbon group optionally having a heteroatom" means that the hydrocarbon group may have a heteroatom-containing monovalent substituent that substitutes a hydrogen atom of the hydrocarbon group, or may have a heteroatom-containing divalent substituent that substitutes a divalent group (e.g., a methylene group) containing a carbon atom of the hydrocarbon group. When one or more carbon atoms of the hydrocarbon group has an oxo group (=O) as a substituent, the carbon atom(s) having the oxo group is/are a carbonyl group(s) {-C(=O)-}.

The hydrocarbon group having 1 to 10 carbon atoms is preferably a hydrocarbon group having 1 to 6 carbon atoms, particularly preferably a hydrocarbon group having 1 to 4 carbon atoms.

The hydrocarbon group is specifically, for example, an alkyl group, an alkenyl group, an alkynyl group, an aryl group, or an aralkyl group.

Specific examples of the alkyl group include a methyl group, an ethyl group, an n-propyl group, an iso-propyl group, an n-butyl group, a tert-butyl group, an n-pentyl group, a hexyl group, a heptyl group, an octyl group, a nonyl group, and a decyl group. Thereamong, the alkyl group is, for example, preferably a methyl group, an ethyl group, an *n*-propyl group, an *n*-butyl group, a *tert*-butyl group, an *n*-pentyl group, or a hexyl group, more preferably a methyl group, an ethyl group, an *n*-propyl group, an *n*-butyl group, a *tert*-butyl group, or an *n*-pentyl group, particularly preferably a methyl group, an ethyl group, an *n*-butyl group, or a *tert*-butyl group. When the hydrocarbon group is any of the above-exemplified alkyl groups, the compound of Formula (A) tends to be localized in the vicinity of the surface of a positive electrode active material and/or the vicinity of the surface of a negative electrode active material, which is preferred.

Specific examples of the alkenyl group include a vinyl group, an allyl group, a methallyl group, a 2-butenyl group, a 3-methyl-2-butenyl group, a 3-butenyl group, and a 4-pentenyl group. Thereamong, the alkenyl group is, for example, preferably a vinyl group, an allyl group, a methallyl group, or a 2-butenyl group, more preferably a vinyl group, an allyl group, or a methallyl group, particularly preferably a vinyl group or an allyl group. When the hydrocarbon group is any of the above-exemplified alkenyl groups, the compound of Formula (A) tends to be localized in the vicinity of the surface of a positive electrode active material and/or the vicinity of the surface of a negative electrode active material, which is preferred.

Specific examples of the alkynyl group include an ethynyl group, a 2-propynyl group, a 2-butynyl group, a 3-butynyl group, a 4-pentynyl group, and a 5-hexynyl group. Thereamong, the alkynyl group is, for example, preferably an ethynyl group, a 2-propynyl group, a 2-butynyl group, or a 3-butynyl group, more preferably a 2-propynyl group or a 3-butynyl group, particularly preferably a 2-propynyl group. When the hydrocarbon group is any of the above-exemplified alkynyl groups, the compound of Formula (A) tends to be localized in the vicinity of the surface of a positive electrode active material and/or the vicinity of the surface of a negative electrode active material, which is preferred.

Specific examples of the aryl group include a phenyl group and a tolyl group. Between these groups, the aryl group is preferably a phenyl group since this makes the compound of Formula (A) tend to be localized in the vicinity of the surface of a positive electrode active material and/or the vicinity of the surface of a negative electrode active material.

Specific examples of the aralkyl group include a phenylmethyl group (a benzyl group), a phenylethyl group (a phenethyl group), a phenylpropyl group, a phenylbutyl group, and a phenylisopropyl group. Thereamong, the aralkyl group is more preferably a benzyl group or a phenethyl group, particularly preferably a benzyl group, since this makes the compound represented by Formula (A) tend to be localized in the vicinity of the surface of a positive electrode active material and/or the vicinity of the surface of a negative electrode active material.

The heteroatom is, for example, an oxygen atom, a sulfur atom, a nitrogen atom, a phosphorus atom, or a halogen atom.

Examples of the heteroatom-containing monovalent substituent include a cyano group, an isocyanato group, an acyl group (-(C=O)-R^{a}), an acyloxy group (-O(C=O)-R^{a}), an alkoxycarbonyl group (- (C=O)O-R^{a}), a sulfonyl group (-SO₂-R^{a}), a sulfonyloxy group (-O(SO₂)-R^{a}), an alkoxysulfonyl group (-(SO₂)-O-R^{a}), an alkoxysulfonyloxy group (-O-(SO₂)-O-R^{a}), an alkoxycarbonyloxy group (-O-(C=O)-O-R^{a}), an ether group (-O-R^{a}), a halogen atom (preferably a fluorine atom), and a trifluoromethyl group. It is noted here that R^{a} represents an alkyl group having 1 to 10 carbon atoms, an alkylene group having 1 to 10 carbon atoms, an alkoxy group having 1 to 10 carbon atoms, an alkenyl group having 2 to 10 carbon atoms, or an alkynyl group having 2 to 10 carbon atoms. When R^{a} is an alkylene group, it may be bound to a portion of the hydrocarbon group being substituted to form a ring.

Among these substituents, a cyano group, an isocyanato group, an acyloxy group (-O(C=O)-R^{a}), a halogen atom (preferably a fluorine atom), or a trifluoromethyl group is preferred; an isocyanato group, an acyloxy group (-O(C=O)-R^{a}), a halogen atom (preferably a fluorine atom), or a trifluoromethyl group is more preferred; an acyloxy group (-O(C=O)-R^{a}), a halogen atom (preferably a fluorine atom), or a trifluoromethyl group is still more preferred; and a fluorine atom is particularly preferred.

The heteroatom of the heteroatom-containing divalent substituent that substitutes a divalent group (e.g., a methylene group) containing a carbon atom of the hydrocarbon group is, for example, an oxygen atom, a sulfur atom, a nitrogen atom, or a phosphorus atom. From the standpoint of enhancing the interaction with the compound represented by Formula (α), the heteroatom is preferably a phosphorus atom or a nitrogen atom, particularly preferably a nitrogen atom. It is noted here that, when any one of R¹ to R³ has a heteroatom, a lone electron pair of the heteroatom may be coordinated with the boron atom.

Specific examples of the trialkylsilyl group include a trimethylsilyl group, a triethylsilyl group, a tripropylsilyl group, a tributylsilyl group, a triisopropylsilyl group, and a tert-butyldimethylsilyl group. Thereamong, the trialkylsilyl group is preferably a trimethylsilyl group or a triethylsilyl group since it interacts with the compound represented by Formula (α) in a preferred manner.

The substituent that the trialkylsilyl group optionally has may be, for example, a hydrocarbon group having an unsaturated bond, such as an alkenyl group, an alkynyl group, an aryl group, or an aralkyl group, or a heteroatom-containing monovalent substituent that substitutes a hydrogen atom of an alkyl group bound to the Si atom of the trialkylsilyl group.

Examples of the heteroatom-containing monovalent substituent include a cyano group, an isocyanato group, an acyl group (-(C=O)-R^{b}), an acyloxy group (-O(C=O)-R^{b}), an alkoxycarbonyl group (- (C=O)O-R^{b}), a sulfonyl group (-SO₂-R^{b}), a sulfonyloxy group (-O(SO₂)-R^{b}), an alkoxysulfonyl group (-(SO₂)-O-R^{b}), an alkoxysulfonyloxy group (-O-(SO₂)-O-R^{a}), an alkoxycarbonyloxy group (-O- (C=O)-O-R^{b}), an ether group (-O-R^{b}), a halogen atom (preferably a fluorine atom), and a trifluoromethyl group. It is noted here that R^{a} represents an alkyl group having 1 to 10 carbon atoms, an alkylene group having 1 to 10 carbon atoms, an alkoxy group having 1 to 10 carbon atoms, an alkenyl group having 2 to 10 carbon atoms, or an alkynyl group having 2 to 10 carbon atoms. When R^{a} is an alkylene group, it may be bound to a portion of the hydrocarbon group being substituted to form a ring.

Among these substituents that the trialkylsilyl group optionally has, an alkenyl group, an alkynyl group, a cyano group, an isocyanato group, an acyloxy group (-O(C=O)-R^{a}), a halogen atom (preferably a fluorine atom), or a trifluoromethyl group is preferred; an isocyanato group, an acyloxy group (-O(C=O)-R^{a}), a halogen atom (preferably a fluorine atom), or a trifluoromethyl group is more preferred; an alkenyl group, an acyloxy group (-O(C=O)-R^{a}), a halogen atom (preferably a fluorine atom), or a trifluoromethyl group is still more preferred; and a fluorine atom is particularly preferred.

Further, R¹ to R³ are optionally bound to each other to form a ring. The phrase "R¹ to R³ are optionally bound to each other to form a ring" used herein means that two of R¹ to R³ may be bound to each other to form a ring, or all of R¹ to R³ in combination may be bound to one another.

R¹ to R³ according to Formula (A) are optionally the same or different from each other; however, it is preferred that at least two of R¹ to R³ be the same from the standpoint of the ease of synthesizing the compound, and it is more preferred that all three of R¹ to R³ be the same from the aforementioned standpoint. Further, from the standpoint of facilitating the compound represented by Formula (A) to sterically interact with the compound represented by Formula (α) , it is preferred that at least two of R¹ to R³ be bound to each other to form a ring, it is more preferred that R¹ to R³ be bound to one another to form a ring, and it is still more preferred that R¹ to R³ be bound to one another via a heteroatom to form a ring.

A boron-containing cyclic compound, which is the compound represented by Formula (A) wherein R¹ to R³ are bound to one another via a heteroatom to form a ring, is specifically a compound represented by the following Formula (A').

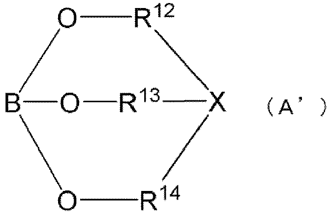

R¹² to R¹⁴ according to Formula (A') each independently represent an alkylene group having 1 to 10 carbon atoms and optionally having a substituent, preferably an alkylene group having 1 to 6 carbon atoms, particularly preferably an alkylene group having 2 to 4 carbon atoms. Specific examples of R¹² to R¹⁴ include alkylene groups obtained by removing one hydrogen atom from the respective alkyl groups exemplified above for R¹ to R³, such as a methylene group, a methylmethylene group, an ethylmethylene group, a dimethylmethylene group, a diethylmethylene group, a methylethylene group, a dimethylene group (an ethylene group), a trimethylene group (a propylene group), and a tetramethylene group (a butylene group) . Specific examples of the substituent include those groups exemplified above for the heteroatom-containing monovalent substituent.

X according to Formula (A') represents an at least trivalent or pentavalent heteroatom and may be, for example, a phosphorus atom (P), P=O, or a nitrogen atom (N). X according to Formula (A') is particularly preferably a nitrogen atom. A lone electron pair of the heteroatom X may be coordinated with the boron atom.

R¹² to R¹⁴ according to Formula (A') are optionally the same or different from each other; however, it is preferred that at least two of R¹² to R¹⁴ be the same from the standpoint of the ease of synthesizing the compound, and it is more preferred that all three of R¹² to R¹⁴ be the same from the aforementioned standpoint.

The compound according to Formula (A) is preferably a compound represented by the above-described Formula (A') or the following Formula (A"):

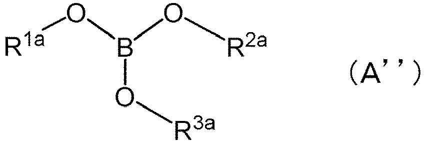

In Formula (A"), R^{1a'} to R^{3a'} each independently represent a hydrocarbon group having 1 to 10 carbon atoms and optionally having a heteroatom, or a trialkylsilyl group optionally having a substituent; and at least one of R^{1a'} to R^{3a'} is a heteroatom-containing hydrocarbon group having 1 to 10 carbon atoms, or a trialkylsilyl group optionally having a substituent.

R^{1a} to R^{3a} correspond to the above-described R¹ to R³, and preferred conditions thereof can also be applied in the same manner.

The compound represented by Formula (A') is preferably the below-described triethanolamine borate, and the compound represented by Formula (A") is preferably the below-described tris(trimethylsilyl) borate.

In one embodiment of the present invention, the compound represented by Formula (A) is used, and specific examples thereof include compounds having the following structures.

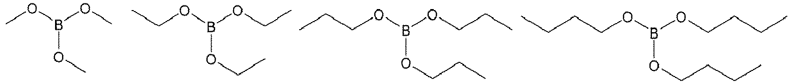

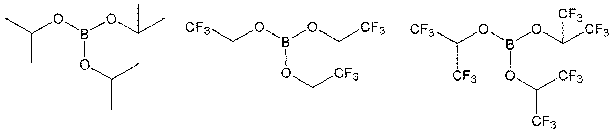

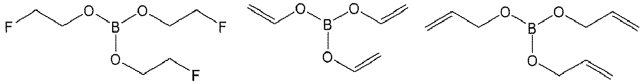

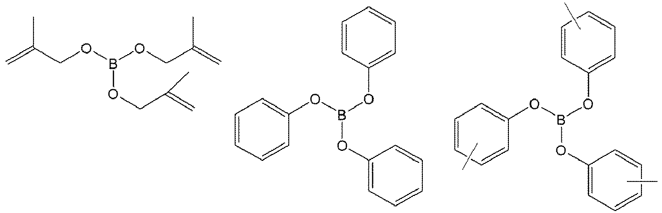

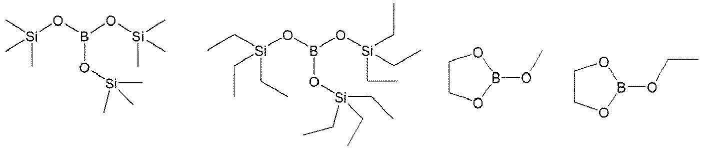

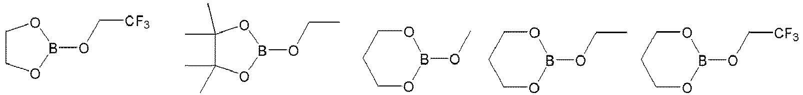

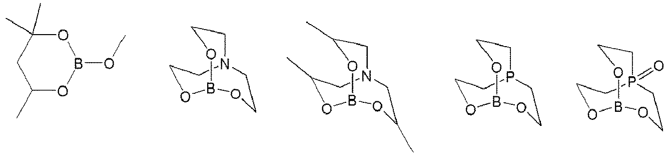

Preferred examples include the following compounds.

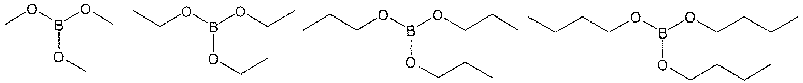

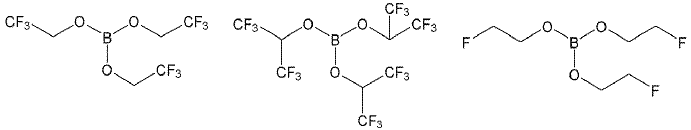

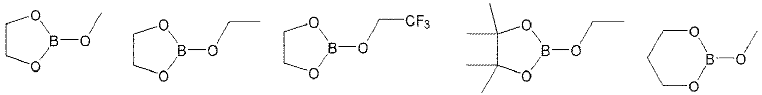

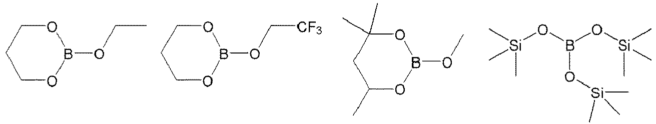

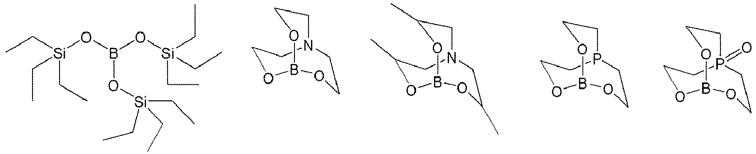

More preferred examples include the following compounds.

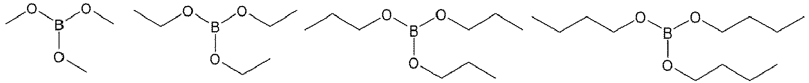

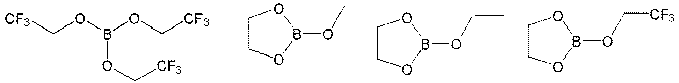

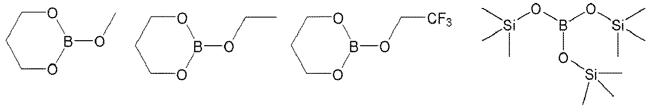

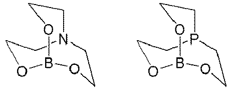

Particularly preferred examples include the following compounds.

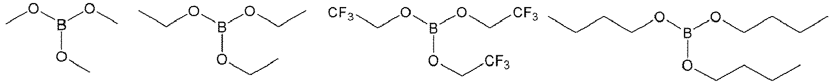

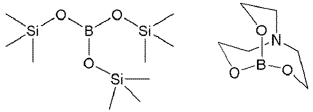

Thereamong, the compound represented by Formula (A) is particularly preferably triethanolamine borate which is a boron-containing cyclic compound, or tris(trimethylsilyl) borate which is a trialkylsilyl group-containing boric acid ester compound.

The compound represented by Formula (A) may be used singly, or two or more thereof may be used in combination. A total content of compounds represented by Formula (A) is usually not less than 1.0 × 10⁻³% by mass, preferably not less than 0.01% by mass, more preferably not less than 0.1% by mass, but usually 10% by mass or less, preferably 5.0% by mass or less, more preferably 3.0% by mass or less, still more preferably 2.0% by mass or less, particularly preferably 1.0% by mass or less, with respect to a total amount of the nonaqueous electrolytic solution according to one embodiment of the present invention.

When the total content of compounds represented by Formula (A) with respect to a total amount of the nonaqueous electrolytic solution is in the above-described range, concentration of the compounds into active materials progresses in a preferred manner, so that a battery with reduced gas generation during initial conditioning can be produced.

In the nonaqueous electrolytic solution, the compound represented by Formula (A) is identified and the content thereof is measured by nuclear magnetic resonance (NMR) spectroscopy.

### <1-2. Compound Represented by Formula (α)>

The nonaqueous electrolytic solution according to one embodiment of the present invention is characterized by containing a compound represented by the following Formula (α) .

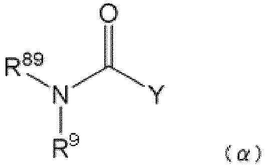

In Formula (α), R⁸⁹ represents a hydrogen atom or a silyl group represented by -SiR⁶R⁷R⁸; R⁶ to R⁸ each independently represent a hydrogen atom, a halogen atom, a hydrocarbon group having 1 to 12 carbon atoms and optionally having a substituent, or an alkoxy group having 1 to 12 carbon atoms and optionally having a substituent; R⁹ represents a hydrogen atom, a hydrocarbon group having 1 to 12 carbon atoms and optionally having a substituent, or a silyl group represented by -SiR^{d}R^{e}R^{f}; R^{d} to R^{f} each independently represent a hydrogen atom, a halogen atom, a hydrocarbon group having 1 to 12 carbon atoms and optionally having a substituent, or an alkoxy group having 1 to 12 carbon atoms and optionally having a substituent; Y represents a hydrogen atom, a halogen atom, a hydrocarbon group having 1 to 12 carbon atoms and optionally having a substituent, an alkoxy group having 1 to 12 carbon atoms and optionally having a substituent, a group represented by -NR^{g}-SiR^{h}RⁱR^{j}, or a group represented by -NR^{g}-H; R^{g} represents a hydrogen atom, or a hydrocarbon group having 1 to 12 carbon atoms and optionally having a substituent; R^{h} to R^{j} each independently represent a hydrogen atom, a halogen atom, a hydrocarbon group having 1 to 12 carbon atoms and optionally having a substituent, or an alkoxy group having 1 to 12 carbon atoms and optionally having a substituent; and R⁹ and R^{g} are optionally bound to each other to form a ring.

R⁸⁹ according to Formula (α) represents a hydrogen atom or a silyl group represented by -SiR⁶R⁷R⁸, and R⁶ to R⁸ each independently represent a hydrogen atom, a halogen atom, a hydrocarbon group having 1 to 12 carbon atoms and optionally having a substituent, or an alkoxy group having 1 to 12 carbon atoms and optionally having a substituent. Particularly, R⁶ to R⁸ are each preferably a hydrocarbon group having 1 to 12 carbon atoms and optionally having a substituent, or an alkoxy group having 1 to 12 carbon atoms and optionally having a substituent, especially preferably a hydrocarbon group having 1 to 12 carbon atoms and optionally having a substituent. It is noted here that, when the hydrocarbon group has a substituent, the number of carbon atoms contained in the substituent is not included in the number of carbon atoms of the hydrocarbon group.

Further, at least one of R⁶ to R⁸ is preferably an alkyl group having 1 to 12 carbon atoms since this makes the compound of Formula (α) tend to be localized on the electrode surfaces in a preferred manner. It is particularly preferred that all of R⁶ to R⁸ be alkyl groups having 1 to 12 carbon atoms.

R⁶ to R⁸ according to Formula (α) are optionally the same or different from each other; however, it is preferred that at least two of R⁶ to R⁸ be the same from the standpoint of the ease of synthesizing the compound, and it is more preferred that all three of R⁶ to R⁸ be the same from the aforementioned standpoint.

Examples of the halogen atom include a fluorine atom, a chlorine atom, and a bromine atom. The halogen atom is preferably a fluorine atom since it hardly causes an electrochemical side reaction.

The hydrocarbon group having 1 to 12 carbon atoms is preferably a hydrocarbon group having 1 to 6 carbon atoms, particularly preferably a hydrocarbon group having 1 to 4 carbon atoms.

The hydrocarbon group is specifically, for example, an alkyl group, an alkenyl group, an alkynyl group, an aryl group, or an aralkyl group.

Specific examples of the alkyl group include a methyl group, an ethyl group, an *n*-propyl group, an *iso*-propyl group, an *n*-butyl group, a *tert*-butyl group, an *n*-pentyl group, a hexyl group, a heptyl group, an octyl group, a nonyl group, and a decyl group. Thereamong, the alkyl group is, for example, preferably a methyl group, an ethyl group, an *n*-propyl group, an *n*-butyl group, a *tert*-butyl group, an *n*-pentyl group, or a hexyl group, more preferably a methyl group, an ethyl group, an *n*-propyl group, an *n*-butyl group, a *tert*-butyl group, or an *n*-pentyl group, particularly preferably a methyl group, an ethyl group, an *n*-butyl group, or a *tert*-butyl group. When the hydrocarbon group is any of the above-exemplified alkyl groups, the compound of Formula (α) tends to be localized in the vicinity of the surface of a positive electrode active material and/or the vicinity of the surface of a negative electrode active material, which is preferred.

Specific examples of the alkenyl group include a vinyl group, an allyl group, a methallyl group, a 2-butenyl group, a 3-methyl-2-butenyl group, a 3-butenyl group, and a 4-pentenyl group. Thereamong, the alkenyl group is, for example, preferably a vinyl group, an allyl group, a methallyl group, or a 2-butenyl group, more preferably a vinyl group, an allyl group, or a methallyl group, particularly preferably a vinyl group or an allyl group. When the hydrocarbon group is any of the above-exemplified alkenyl groups, the compound of Formula (α) tends to be localized in the vicinity of the surface of a positive electrode active material and/or the vicinity of the surface of a negative electrode active material, which is preferred.

Specific examples of the alkynyl group include an ethynyl group, a 2-propynyl group, a 2-butynyl group, a 3-butynyl group, a 4-pentynyl group, and a 5-hexynyl group. Thereamong, the alkynyl group is, for example, preferably an ethynyl group, a 2-propynyl group, a 2-butynyl group, or a 3-butynyl group, more preferably a 2-propynyl group or a 3-butynyl group, particularly preferably a 2-propynyl group. When the hydrocarbon group is any of the above-exemplified alkynyl groups, the compound of Formula (α) tends to be localized in the vicinity of the surface of a positive electrode active material and/or the vicinity of the surface of a negative electrode active material, which is preferred.

Specific examples of the aryl group include a phenyl group and a tolyl group. Between these groups, a phenyl group is preferred since it makes the compound of Formula (α) tend to be localized in the vicinity of the surface of a positive electrode active material and/or the vicinity of the surface of a negative electrode active material.

Specific examples of the aralkyl group include a phenylmethyl group (a benzyl group), a phenylethyl group (a phenethyl group), a phenylpropyl group, a phenylbutyl group, and a phenylisopropyl group. Thereamong, the aralkyl group is more preferably a benzyl group or a phenethyl group, particularly preferably a benzyl group, since this makes the compound represented by Formula (α) tend to be localized in the vicinity of the surface of a positive electrode active material and/or the vicinity of the surface of a negative electrode active material.

The alkoxy group having 1 to 12 carbon atoms is preferably an alkoxy group having 1 to 6 carbon atoms, particularly preferably an alkoxy group having 1 to 4 carbon atoms.

Specific examples of the alkoxy group having 1 to 12 carbon atoms include a methoxy group, an ethoxy group, a propoxy group, a butoxy group, and an isopropoxy group. Thereamong, a methoxy group or an ethoxy group is preferred since it allows the compound to have a limited steric hindrance and be concentrated on the active material surface in a preferred manner.

Examples of the above-described substituent include a cyano group, an isocyanato group, an acyl group (-(C=O)-R^{b}), an acyloxy group (-O(C=O)-R^{b}), an alkoxycarbonyl group (-(C=O)O-R^{b}), a sulfonyl group (-SO₂-R^{b}), a sulfonyloxy group (-O(SO₂)-R^{b}), an alkoxysulfonyl group (-(SO₂)-O-R^{b}), an alkoxysulfonyloxy group (-O-(SO₂)-O-R^{b}), an alkoxycarbonyloxy group (-O-(C=O)-O-R^{b}), an ether group (-O-R^{b}), an acryl group, a methacryl group, a halogen atom (preferably a fluorine atom), and a trifluoromethyl group. It is noted here that R^{b} represents an alkyl group having 1 to 10 carbon atoms, an alkylene group having 1 to 10 carbon atoms, an alkoxy group having 1 to 10 carbon atoms, an alkenyl group having 2 to 10 carbon atoms, or an alkynyl group having 2 to 10 carbon atoms. When R^{b} is an alkylene group, it may be bound to a portion of the hydrocarbon group being substituted to form a ring.

Among these substituents, a cyano group, an isocyanato group, an acyloxy group (-O(C=O)-R^{b}), a halogen atom (preferably a fluorine atom), or a trifluoromethyl group is preferred; an isocyanato group, an acyloxy group (-O(C=O)-R^{b}), a halogen atom (preferably a fluorine atom), or a trifluoromethyl group is more preferred; and an acyloxy group (-O(C=O)-R^{b}), a halogen atom (preferably a fluorine atom), or a trifluoromethyl group is particularly preferred.

R⁹ according to Formula (α) represents a hydrogen atom, a hydrocarbon group having 1 to 12 carbon atoms and optionally having a substituent, or a silyl group represented by -SiR^{d}R^{e}R^{f}. Particularly, R⁹ is preferably a hydrocarbon group having 1 to 12 carbon atoms and optionally having a substituent, or a silyl group represented by -SiR^{d}R^{e}R^{f}.

It is noted here that the hydrocarbon group having 1 to 12 carbon atoms and optionally having a substituent has the same meaning as defined above for R⁶ to R⁸.

Further, in the silyl group represented by -SiR^{d}R^{e}R^{f}, R^{d} to R^{f} each independently represent a hydrogen atom, a halogen atom, a hydrocarbon group having 1 to 12 carbon atoms and optionally having a substituent, or an alkoxy group having 1 to 12 carbon atoms and optionally having a substituent.

It is noted here that the halogen atom, the hydrocarbon group having 1 to 12 carbon atoms and optionally having a substituent, and the alkoxy group having 1 to 12 carbon atoms and optionally having a substituent all have the same meanings as defined above for R⁶ to R⁸.

Y according to Formula (α) represents a hydrogen atom, a halogen atom, a hydrocarbon group having 1 to 12 carbon atoms and optionally having a substituent, an alkoxy group having 1 to 12 carbon atoms and optionally having a substituent, or a group represented by -NR^{g}-SiR^{h}RⁱR^{j} or -NR^{g}-H; R^{g} represents a hydrogen atom or a hydrocarbon group having 1 to 12 carbon atoms and optionally having a substituent; and R^{h} to R^{j} each independently represent a hydrogen atom, a halogen atom, a hydrocarbon group having 1 to 12 carbon atoms and optionally having a substituent, or an alkoxy group having 1 to 12 carbon atoms and optionally having a substituent.

It is noted here that the halogen atom, the hydrocarbon group having 1 to 12 carbon atoms and optionally having a substituent, and the alkoxy group having 1 to 12 carbon atoms and optionally having a substituent all have the same meanings as defined above for R⁶ to R⁸.

In the group represented by -NR^{g}-SiR^{h}RⁱR^{j}, R^{g} has the same meaning as defined above for R⁹. Further, the group represented by -SiR^{h}RⁱR^{j} has the same meaning as the group represented by -SiR^{d}R^{e}R^{f}.

In the group represented by -NR^{g}-H, R^{g} is a hydrogen atom or a hydrocarbon group having 1 to 12 carbon atoms and optionally having a substituent. The hydrocarbon group having 1 to 12 carbon atoms and optionally having a substituent has the same meaning as defined above for R¹¹. Particularly, R^{g} is preferably a hydrogen atom or a hydrocarbon group having 1 to 12 carbon atoms and optionally having a substituent, more preferably a hydrogen atom or a hydrocarbon group having 1 to 12 carbon atoms, still more preferably a hydrogen atom or a hydrocarbon group having 1 to 6 carbon atoms, especially preferably a hydrogen atom or a hydrocarbon group having 1 to 4 carbon atoms.

The compound represented by Formula (α) is preferably the below-described compound represented by Formula (α1) or compound represented by Formula (α2).

### (Compound Represented by Formula (α1))

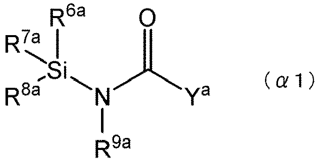

In Formula (α1), R^{6a} to R^{8a} each independently represent a hydrogen atom, a halogen atom, a hydrocarbon group having 1 to 12 carbon atoms and optionally having a substituent, or an alkoxy group having 1 to 12 carbon atoms and optionally having a substituent; R^{9a} represents a hydrogen atom, a hydrocarbon group having 1 to 12 carbon atoms and optionally having a substituent, or a silyl group represented by -SiR^{da}R^{ea}R^{fa}; R^{da} to R^{fa} each independently represent a hydrogen atom, a halogen atom, a hydrocarbon group having 1 to 12 carbon atoms and optionally having a substituent, or an alkoxy group having 1 to 12 carbon atoms and optionally having a substituent; Y^{a} represents a hydrogen atom, a halogen atom, a hydrocarbon group having 1 to 12 carbon atoms and optionally having a substituent, an alkoxy group having 1 to 12 carbon atoms and optionally having a substituent, a group represented by -NR^{ga}-SiR^{ha}R^{ia}R^{ja}, or a group represented by -NR^{ga}-H; R^{ga} represents a hydrogen atom or a hydrocarbon group having 1 to 12 carbon atoms and optionally having a substituent; R^{ha} to R^{ja} each independently represent a hydrogen atom, a halogen atom, a hydrocarbon group having 1 to 12 carbon atoms and optionally having a substituent, or an alkoxy group having 1 to 12 carbon atoms and optionally having a substituent; and R^{9a} and R^{ga} are optionally bound to each other to form a ring.

In Formula (α1), R^{6a} to R^{9a}, Y^{a}, and R^{da} to R^{ja} correspond to R⁶ to R⁹, Y, and R^{d} to R^{j} of the above-described Formula (α), respectively, and preferred conditions thereof can also be applied in the same manner.

### (Compound Represented by Formula (α2))

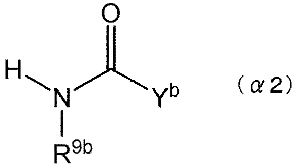

In Formula (α2), R^{9b} represents a hydrogen atom, a hydrocarbon group having 1 to 12 carbon atoms and optionally having a substituent, or a silyl group represented by -SiR^{db}R^{eb}R^{fb}; R^{db} to R^{fb} each independently represent a hydrogen atom, a halogen atom, a hydrocarbon group having 1 to 12 carbon atoms and optionally having a substituent, or an alkoxy group having 1 to 12 carbon atoms and optionally having a substituent; Y^{b} represents a hydrogen atom, a halogen atom, a hydrocarbon group having 1 to 12 carbon atoms and optionally having a substituent, an alkoxy group having 1 to 12 carbon atoms and optionally having a substituent, a group represented by -NR^{gb}-SiR^{hb}R^{ib}R^{jb}, or a group represented by -NR^{ga}-H; R^{gb} represents a hydrogen atom or a hydrocarbon group having 1 to 12 carbon atoms and optionally having a substituent; R^{hb} to R^{jb} each independently represent a hydrogen atom, a halogen atom, a hydrocarbon group having 1 to 12 carbon atoms and optionally having a substituent, or an alkoxy group having 1 to 12 carbon atoms and optionally having a substituent; and R⁹ and R^{g} are optionally bound to each other to form a ring.

In Formula (α2), R^{9b}, Y^{b}, and R^{db} to R^{jb} correspond to R⁹, Y, and R^{d} to R^{j} of the above-described Formula (α), respectively, and preferred conditions thereof can also be applied in the same manner.

Specific examples of the compound represented by Formula (α) according to the present embodiment include the following compounds.

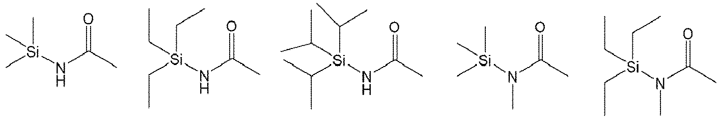

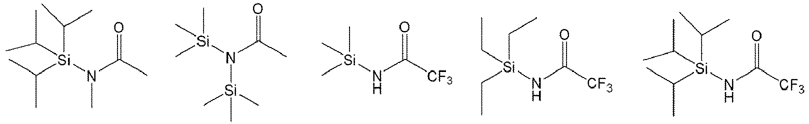

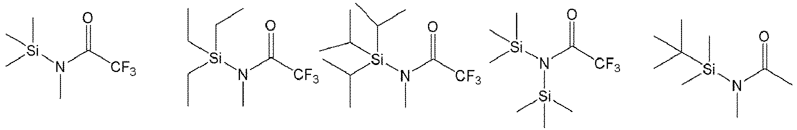

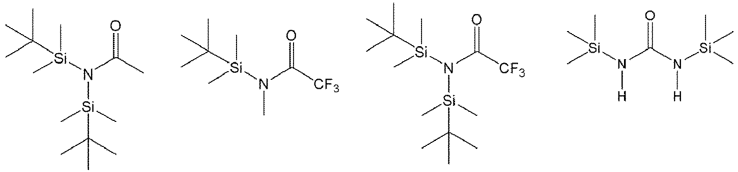

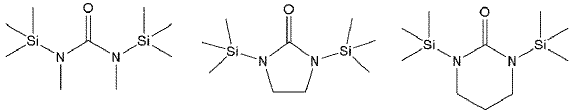

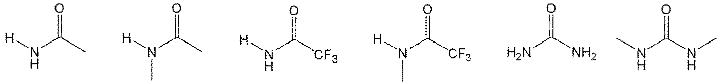

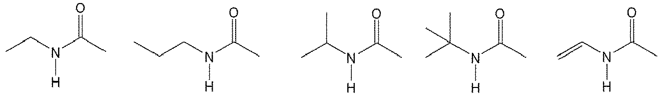

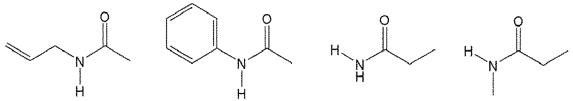

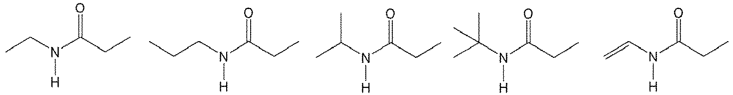

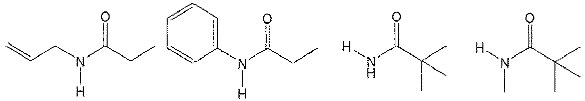

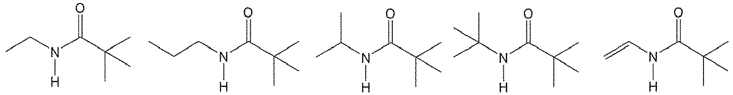

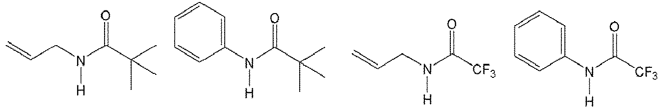

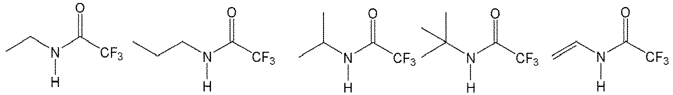

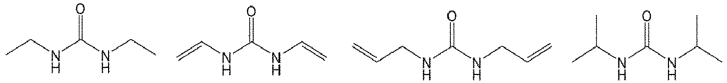

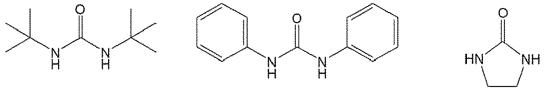

Preferred examples include the following compounds.

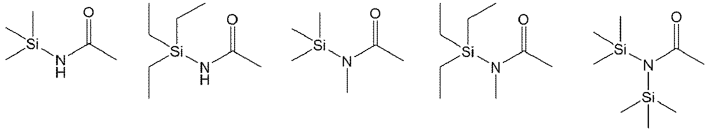

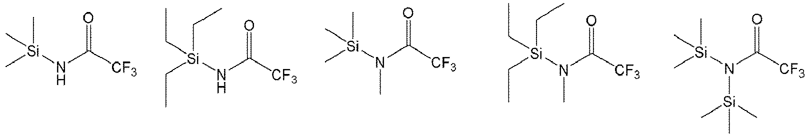

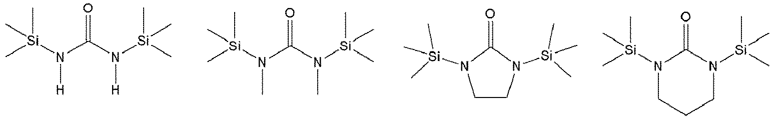

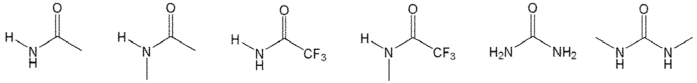

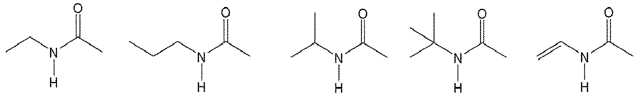

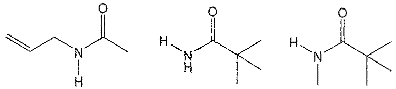

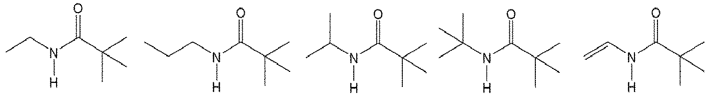

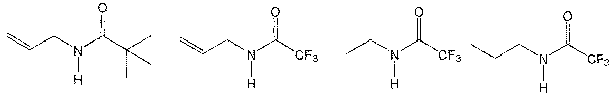

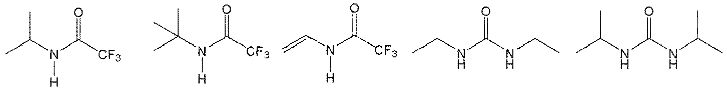

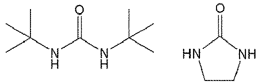

More preferred examples include the following compounds.

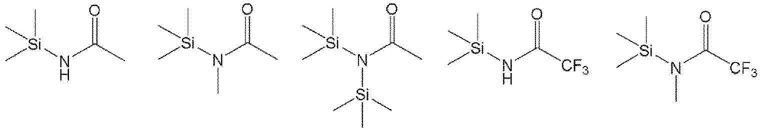

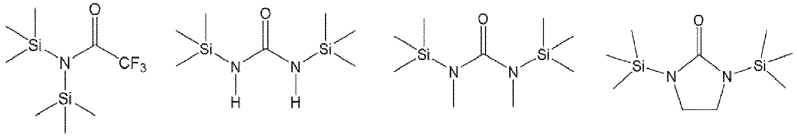

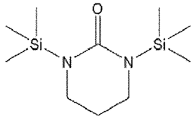

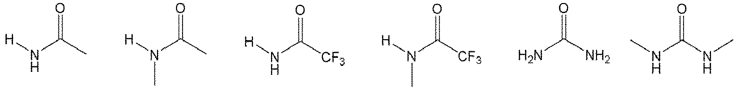

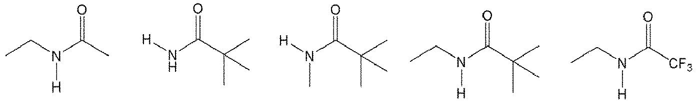

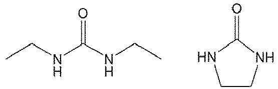

Particularly preferred examples include the following compounds.

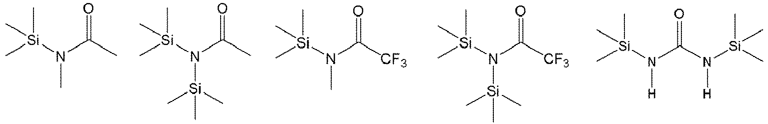

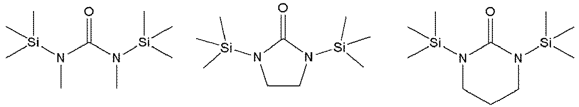

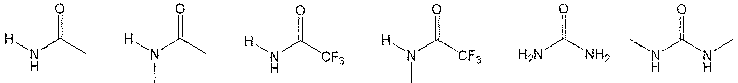

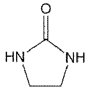

The compound represented by Formula (α) may be used singly, or two or more thereof may be used in combination. When two or more compounds represented by Formula (α) are used, it is preferred that at least one each of the compound represented by Formula (α1) and the compound represented by Formula (α2) be contained therein since this improves the fixation rate on an electrode. The content (mass) ratio of the compound represented by Formula (α1) and the compound represented by Formula (α2) is not particularly limited; however, it is usually in a range of 10,000:1 to 1:10,000.

A total content of compounds represented by Formula (α) with respect to a total amount of the nonaqueous electrolytic solution according to one embodiment of the present invention is not particularly limited; however, it is preferably not less than 0.01 ppm by mass, more preferably not less than 0.1 ppm by mass, still more preferably not less than 1.0 ppm by mass, particularly preferably not less than 10 ppm by mass, but preferably 0.5% by mass or less, more preferably less than 0.5% by mass, still more preferably 0.4% by mass or less, yet still more preferably 0.3% by mass or less, yet still more preferably 0.2% by mass or less, yet still more preferably 0.1% by mass or less, yet still more preferably 0.05% by mass or less, yet still more preferably 0.03% by mass or less.

When the total content of compounds represented by Formula (α) with respect to a total amount of the nonaqueous electrolytic solution is in the above-described range, concentration of the compounds represented by Formula (α) into active materials progresses in a preferred manner, so that a battery with reduced gas generation during initial conditioning can be produced.

It is noted here that, when two or more compounds represented by Formula (α) are used, a total amount thereof is defined as "content of the compound represented by Formula (α)".

In the nonaqueous electrolytic solution, a mass ratio of the content of the compound represented by Formula (A) with respect to the content of the compound represented by Formula (α) is not particularly limited; however, it is usually 1.0 or higher, preferably 2.0 or higher, particularly preferably 3.0 or higher, but usually 10,000 or lower, preferably 7, 000 or lower, more preferably 4,000 or lower, still more preferably 2,000 or lower, especially preferably 1,000 or lower, particularly preferably 500 or lower.

A total content of compounds represented by Formula (α1) with respect to a total amount of the nonaqueous electrolytic solution according to one embodiment of the present invention is not particularly limited; however, it is preferably not less than 0.01 ppm by mass, more preferably not less than 0.1 ppm by mass, still more preferably not less than 1.0 ppm by mass, particularly preferably not less than 10 ppm by mass, but usually 0.5% by mass or less, preferably less than 0.5% by mass, more preferably 0.4% by mass or less, still more preferably 0.3% by mass or less, especially preferably 0.2% by mass or less, particularly preferably 0.1% by mass or less.

When the total content of compounds represented by Formula (α1) with respect to a total amount of the nonaqueous electrolytic solution is in the above-described range, concentration of the compounds represented by Formula (α1) into active materials progresses in a preferred manner, so that a battery with reduced gas generation during initial conditioning can be produced.

In the nonaqueous electrolytic solution, a mass ratio of the content of the compound represented by Formula (A) with respect to the content of the compound represented by Formula (α1) is not particularly limited; however, it is usually 1.0 or higher, preferably 2.0 or higher, particularly preferably 3.0 or higher, but usually 10, 000 or lower, preferably 7, 000 or lower, more preferably 4,000 or lower, still more preferably 2,000 or lower, especially preferably 1,000 or lower, particularly preferably 500 or lower.

A total content of compounds represented by Formula (α2) with respect to a total amount of the nonaqueous electrolytic solution according to one embodiment of the present invention is not particularly limited; however, it is preferably not less than 0.01 ppm by mass, more preferably not less than 0.1 ppm by mass, still more preferably not less than 1.0 ppm by mass, particularly preferably not less than 10 ppm by mass, but preferably 0.50% by mass or less, more preferably 0.2% by mass or less, still more preferably 0.1% by mass or less, especially preferably 0.05% by mass or less, particularly preferably 0.03% by mass or less.

When the total content of compounds represented by Formula (α2) with respect to a total amount of the nonaqueous electrolytic solution is in the above-described range, concentration of the compounds represented by Formula (α2) into active materials progresses in a preferred manner, so that a battery with reduced gas generation during initial conditioning can be produced.

In the nonaqueous electrolytic solution, a mass ratio of the content of the compound represented by Formula (A) with respect to the content of the compound represented by Formula (α2) is not particularly limited; however, it is usually 1.0 or higher, preferably 2.0 or higher, particularly preferably 3.0 or higher, but usually 10, 000 or lower, preferably 7, 000 or lower, more preferably 4,000 or lower, still more preferably 2,000 or lower, especially preferably 1,000 or lower, particularly preferably 500 or lower.

In the nonaqueous electrolytic solution, the compound represented by Formula (α) is identified and the content thereof is measured by nuclear magnetic resonance (NMR) spectroscopy or gas chromatography.

A method of incorporating the compound represented by Formula (α) and the compound represented by Formula into an electrolytic solution is not particularly limited. Examples thereof include a method of directly adding the respective compounds to the electrolytic solution, and a method of generating the respective compounds in a battery or the electrolytic solution.

In the present specification, "content" of a compound means the content measured at any one of time points when a nonaqueous electrolytic solution is produced, when the nonaqueous electrolytic solution is injected into a battery, and when the battery is shipped out as a product.

<1-3. Electrolyte>

Similarly to a general nonaqueous electrolytic solution, the nonaqueous electrolytic solution of the present embodiment usually contains an electrolyte as its component. The electrolyte used in the nonaqueous electrolytic solution of the present embodiment is not particularly limited as long as it is an alkali metal salt, and a lithium salt such as LiBF₄, LiPF₆, LiN(FSO₂)₂, LiN (CF₃SO₂)₂, or lithium difluorooxalatoborate can be preferably used. These lithium salts may be used singly, or in combination of two or more thereof.

A total concentration of alkali metal salts in the nonaqueous electrolytic solution is not particularly limited; however, it is usually 8% by mass or higher, preferably 8.5% by mass or higher, more preferably 9% by mass or higher, with respect to a total amount of the nonaqueous electrolytic solution. An upper limit of the total concentration is usually 18% by mass or lower, preferably 17% by mass or lower, more preferably 16% by mass or lower. When the total concentration of alkali metal salts that are electrolytes is in this range, the nonaqueous electrolytic solution has an electrical conductivity appropriate for battery operation, so that sufficient output characteristics tend to be obtained.

In the nonaqueous electrolytic solution, an alkali metal salt is identified and the content thereof is measured by nuclear magnetic resonance (NMR) spectroscopy or ion chromatography.

### <1-4. Nonaqueous Solvent>

Similarly to a general nonaqueous electrolytic solution, the nonaqueous electrolytic solution of the present embodiment usually contains, as its main component, a nonaqueous solvent that dissolves the above-described electrolytes. The nonaqueous solvent is not particularly limited, and any known organic solvent can be used. Examples of the organic solvent include: saturated cyclic carbonates, such as ethylene carbonate, propylene carbonate, and butylene carbonate; linear carbonates, such as dimethyl carbonate, diethyl carbonate, and ethyl methyl carbonate; carboxylic acid esters, such as methyl acetate, ethyl acetate, propyl acetate, and butyl acetate; ether-based compounds, such as dimethoxymethane, diethoxymethane, ethoxymethoxymethane, tetrahydrofuran, 1,3-dioxane, and 1,4-dioxane; and sulfone-based compounds, such as 2-methylsulfolane, 3-methylsulfolane, 2-fluorosulfolane, 3-fluorosulfolane, dimethyl sulfone, ethyl methyl sulfone, and monofluoromethyl methyl sulfone. The organic solvent is preferably a saturated cyclic carbonate, a linear carbonate, or a carboxylic acid ester, more preferably a saturated cyclic carbonate or a linear carbonate. These nonaqueous solvents may be used singly, or in combination of two or more thereof.

### <1-5. Auxiliary Agent>

The nonaqueous electrolytic solution of the present embodiment may also contain an auxiliary agent within a range that the effects of the present invention are exerted.

Examples of the auxiliary agent include:
fluorinated salts, such as difluorophosphates, fluorosulfonates, fluoroboron salts, and fluoroimide salts;
unsaturated cyclic carbonates, such as vinylene carbonate, vinylethylene carbonate, and ethynylethylene carbonate;
fluorinated cyclic carbonates, such as monofluoroethylene carbonate, 4,4-difluoroethylene carbonate, 4,5-difluoroethylene carbonate, and 4,5-difluoro-4,5-dimethylethylene carbonate;
oxalate salts, such as lithium bis (oxalato)borate, lithium tetrafluoro(oxalato)phosphate, lithium difluoro-bis(oxalato)phosphate, and lithium tris(oxalato)phosphate;
carbonate compounds, such as methoxyethyl methyl carbonate;
spiro compounds, such as methyl-2-propynyl oxalate;
sulfur-containing compounds, such as ethylene sulfite;
isocyanate compounds, for example, cycloalkylene group-containing diisocyanates such as 1,3-bis(isocyanatomethyl)cyclohexane, trimeric compounds derived from a compound having at least two isocyanate groups in the molecule, such as triallyl isocyanurate, and aliphatic polyisocyanates obtained by adding a polyhydric alcohol to the trimeric compounds;
nitrogen-containing compounds, such as 1-methyl-2-pyrrolidinone;
hydrocarbon compounds, such as cycloheptane;
fluorine-containing aromatic compounds, such as fluorobenzene;
fluorosilane compounds, such as fluorotrimethylsilane, fluorodimethylvinylsilane, difluorodimethylsilane, and difluorovinylmethylsilane;
ester compounds, such as 2-propynyl 2-(methanesulfonyloxy)propionate; and
lithium salts, such as lithium ethylmethyloxycarbonyl phosphonate.

These auxiliary agents may be used singly, or in combination of two or more thereof. By adding these auxiliary agents, not only the generation of gas during initial conditioning can be inhibited and the initial resistance can be reduced, but also the capacity retention properties after high-temperature storage or the cycle characteristics can be improved.

Among the above-described auxiliary agents, in the nonaqueous electrolytic solution according to one embodiment of the present invention, it is preferred to use one or more selected from a fluorinated salt, an unsaturated cyclic carbonate, a fluorine atom-containing cyclic carbonate, a fluorosilane compound, and an oxalate salt in combination since this further inhibits the generation of gas during initial conditioning, so that a battery unlikely to be swollen is obtained or the battery initial resistance is reduced.

The nonaqueous electrolytic solution more preferably contains at least an unsaturated cyclic carbonate or a fluorine atom-containing cyclic carbonate, still more preferably contains an unsaturated cyclic carbonate and a fluorine atom-containing cyclic carbonate.

It is also preferred that the nonaqueous electrolytic solution contain at least an unsaturated cyclic carbonate or a fluorine atom-containing cyclic carbonate along with at least one selected from a fluorinated salt, a fluorosilane compound, and an oxalate salt since this further inhibits the generation of gas during initial conditioning, so that a battery unlikely to be swollen is obtained or the battery initial resistance is reduced. It is more preferred that the nonaqueous electrolytic solution contain an unsaturated cyclic carbonate and a fluorine atom-containing cyclic carbonate along with at least one selected from a fluorinated salt, a fluorosilane compound, and an oxalate salt, and it is particularly preferred that the nonaqueous electrolytic solution contain an unsaturated cyclic carbonate and a fluorine atom-containing cyclic carbonate along with at least one selected from a fluorinated salt and a fluorosilane compound.

The content of the auxiliary agent is usually not less than 0.001% by mass, preferably not less than 0.01% by mass, more preferably not less than 0.1% by mass, still more preferably not less than 0.2% by mass, but usually 10% by mass or less, preferably 8% by mass or less, more preferably 5% by mass or less, in 100% by mass of the nonaqueous electrolytic solution. When two or more auxiliary agents are used in combination, a total content thereof preferably satisfies the above-described range.

In the nonaqueous electrolytic solution, an auxiliary agent is identified and the content thereof is measured by nuclear magnetic resonance (NMR) spectroscopy.

The above-described "fluorinated salt", "fluorosilane compound", "unsaturated cyclic carbonate", "fluorinated cyclic carbonate", and "oxalate salt" will now be described in detail.

### (Fluorinated Salt)

The nonaqueous electrolytic solution according to the present embodiment may contain a fluorinated salt. The fluorinated salt is not particularly limited; however, a difluorophosphate, a fluorosulfonate, a fluoroboron salt, and a fluoroimide salt are preferred since these fluorinated salts contain a highly dissociable fluorine atom in their structures and are thus capable of reacting with a decomposition product of the compound represented by Formula (A) or (α) in a preferred manner to form a composite coating film and thereby reduce the initial battery resistance. A fluoroboron salt, a fluorosulfonate, and a difluorophosphate are more preferred, and a fluorosulfonate and a difluorophosphate are particularly preferred, since their fluorine atoms are particularly highly dissociable and their reactions with a nucleophile proceed in a preferred manner. A fluorosulfonate is most preferred because of its highly dissociable fluorine atom. Further, the fluorinated salt is preferably a fluorinated lithium salt.

Any of the above-described fluorinated salts may be used singly, or two or more thereof may be used in any combination at any ratio . The content of the fluorinated salt (s) with respect to a total amount of the nonaqueous electrolytic solution is not particularly limited and may be set arbitrarily as long as the effects of the present invention are not markedly impaired; however, it is usually not less than 0.001% by mass, preferably not less than 0.01% by mass, more preferably not less than 0.1% by mass, but usually less than 8% by mass, preferably 5% by mass or less, more preferably 3% by mass or less, still more preferably 2% by mass or less, most preferably 1% by mass or less.

These salts will now be described.

### <Difluorophosphate>

A counter cation of the difluorophosphate is not particularly limited, and examples thereof include lithium, sodium, potassium, rubidium, cesium, magnesium, calcium, barium, and ammonium represented by NR²⁷R²⁸R²⁹R³⁰ (wherein, R²⁷ to R³⁰ each independently represent a hydrogen atom or an organic group having 1 to 12 carbon atoms). Thereamong, lithium is preferred.

The organic group having 1 to 12 carbon atoms that is represented by R²⁷ to R³⁰ of the above-described ammonium is not particularly limited, and examples thereof include alkyl groups optionally substituted with a halogen atom, cycloalkyl groups optionally substituted with a halogen atom or an alkyl group, aryl groups optionally substituted with a halogen atom or an alkyl group, and nitrogen atom-containing heterocyclic groups optionally having a substituent. Thereamong, R²⁷ to R³⁰ are preferably each independently a hydrogen atom, an alkyl group, a cycloalkyl group, or a nitrogen atom-containing heterocyclic group.

Specific examples of the difluorophosphate include lithium difluorophosphate, sodium difluorophosphate, and potassium difluorophosphate, among which lithium difluorophosphate is preferred.

Any of these difluorophosphates may be used singly, or two or more thereof may be used in any combination at any ratio. The content of the difluorophosphate(s) with respect to a total amount of the nonaqueous electrolytic solution is not particularly limited and may be set arbitrarily as long as the effects of the present invention are not markedly impaired; however, it is usually not less than 0.001% by mass, preferably not less than 0.01% by mass, more preferably not less than 0.1% by mass, but usually less than 8% by mass, preferably 5% by mass or less, more preferably 3% by mass or less, still more preferably 2% by mass or less, most preferably 1% by mass or less.

When the content of the difluorophosphate(s) is in this range, a nonaqueous electrolytic solution secondary battery is likely to exhibit a sufficient cycle characteristics-improving effect, and a situation where the high-temperature storage characteristics are deteriorated and the amount of gas generation is thereby increased and the discharge capacity retention rate is reduced is likely to be avoided.

<Fluorosulfonate>

A counter cation of the above-described fluorosulfonate is not particularly limited, and examples thereof include lithium, sodium, potassium, rubidium, cesium, magnesium, calcium, barium, and ammonium represented by NR¹⁷R¹⁸R¹⁹R²⁰ (wherein, R¹⁷ to R²⁰ each independently represent a hydrogen atom or an organic group having 1 to 12 carbon atoms). Thereamong, lithium is preferred.

The organic group having 1 to 12 carbon atoms that is represented by R¹⁷ to R²⁰ of the above-described ammonium is not particularly limited, and examples thereof include alkyl groups optionally substituted with a halogen atom, cycloalkyl groups optionally substituted with a halogen atom or an alkyl group, aryl groups optionally substituted with a halogen atom or an alkyl group, and nitrogen atom-containing heterocyclic groups optionally having a substituent. Thereamong, R¹⁷ to R²⁰ are preferably each independently a hydrogen atom, an alkyl group, a cycloalkyl group, or a nitrogen atom-containing heterocyclic group.

Specific examples of the fluorosulfonate include lithium fluorosulfonate, sodium fluorosulfonate, potassium fluorosulfonate, rubidium fluorosulfonate, and cesium fluorosulfonate, among which lithium fluorosulfonate is preferred.

Any of these fluorosulfonates may be used singly, or two or more thereof may be used in any combination at any ratio. The content of the fluorosulfonate (s) with respect to a total amount of the nonaqueous electrolytic solution is not particularly limited and may be set arbitrarily as long as the effects of the present invention are not markedly impaired; however, it is usually not less than 0.001% by mass, preferably not less than 0.01% by mass, more preferably not less than 0.1% by mass, but usually less than 8% by mass, preferably 5% by mass or less, more preferably 3% by mass or less, still more preferably 2% by mass or less, most preferably 1% by mass or less.

When the content of the fluorosulfonate (s) is in this range, a nonaqueous electrolytic solution secondary battery is likely to exhibit a sufficient cycle characteristics-improving effect, and a situation where the high-temperature storage characteristics are deteriorated and the amount of gas generation is thereby increased and the discharge capacity retention rate is reduced is likely to be avoided.

### <Fluoroboron Salt>

A counter cation of the above-described fluoroboron salt is not particularly limited, and examples thereof include lithium, sodium, potassium, rubidium, cesium, magnesium, calcium, barium, and ammonium represented by NR²¹R²²R²³R²⁴ (wherein, R²¹ to R²⁴ each independently represent a hydrogen atom or an organic group having 1 to 12 carbon atoms). Thereamong, lithium is preferred.

The organic group having 1 to 12 carbon atoms that is represented by R²¹ to R²⁴ of the above-described ammonium is not particularly limited, and examples thereof include alkyl groups optionally substituted with a halogen atom, cycloalkyl groups optionally substituted with a halogen atom or an alkyl group, aryl groups optionally substituted with a halogen atom or an alkyl group, and nitrogen atom-containing heterocyclic groups optionally having a substituent. Thereamong, R²¹ to R²⁴ are preferably each independently a hydrogen atom, an alkyl group, a cycloalkyl group, or a nitrogen atom-containing heterocyclic group.

Specific examples of the fluoroboron salt include LiBF₄ and LiB(CᵢF₂ᵢ₊ₗ)ⱼ(F)₄₋ⱼ, and LiBF₄ is preferred. It is noted here that i represents an integer of 1 to 10, and j represents an integer of 1 to 4.

Any of these fluoroboron salts may be used singly, or two or more thereof may be used in any combination at any ratio. The content of the fluoroboron salt (s) with respect to a total amount of the nonaqueous electrolytic solution is not particularly limited and may be set arbitrarily as long as the effects of the present invention are not markedly impaired; however, it is usually not less than 0.001% by mass, preferably not less than 0.01% by mass, more preferably not less than 0.1% by mass, but usually 3% by mass or less, preferably 1% by mass or less, more preferably 0.8% by mass or less, still more preferably 0.5% by mass or less, most preferably 0.3% by mass or less.

When the content of the fluoroboron salt (s) is in this range, a nonaqueous electrolytic solution secondary battery is likely to exhibit a sufficient cycle characteristics-improving effect, and a situation where the high-temperature storage characteristics are deteriorated and the amount of gas generation is thereby increased and the discharge capacity retention rate is reduced is likely to be avoided.

### <Fluoroimide Salt>

A counter cation of the above-described fluoroimide salt is not particularly limited, and examples thereof include lithium, sodium, potassium, rubidium, cesium, magnesium, calcium, barium, and ammonium represented by NR³¹R³²R³³R³⁴ (wherein, R³¹ to R³⁴ each independently represent a hydrogen atom or an organic group having 1 to 12 carbon atoms). Thereamong, lithium is preferred.

The organic group having 1 to 12 carbon atoms that is represented by R³¹ to R³⁴ of the above-described ammonium is not particularly limited, and examples thereof include alkyl groups optionally substituted with a halogen atom, cycloalkyl groups optionally substituted with a halogen atom or an alkyl group, aryl groups optionally substituted with a halogen atom or an alkyl group, and nitrogen atom-containing heterocyclic groups optionally having a substituent. Thereamong, R³¹ to R³⁴ are preferably each independently a hydrogen atom, an alkyl group, a cycloalkyl group, or a nitrogen atom-containing heterocyclic group.

Specific examples of the fluoroimide salt include LiN(FCO)₂, LiN (FCO) (FSO₂), LiN(FSO₂)₂, LiN(FSO₂)(CF₃SO₂), LiN(CF₃SO₂)₂, LiN(C₂F₅SO₂)₂, lithium cyclic 1,2-perfluoroethane disulfonylimide, lithium cyclic 1,3-perfluoropropane disulfonylimide, and LiN (CF₃SO₂) (C₄F₉SO₂), among which LiN (FSO₂)₂, LiN (CF₃SO₂)₂, and LiN(C₂F₅SO₂)₂ are preferred.

Any of these fluoroimide salts may be used singly, or two or more thereof may be used in any combination at any ratio. The content of the fluoroimide salt (s) with respect to a total amount of the nonaqueous electrolytic solution is not particularly limited and may be set arbitrarily as long as the effects of the present invention are not markedly impaired; however, it is usually not less than 0.001% by mass, preferably not less than 0.01% by mass, more preferably not less than 0.1% by mass, but usually less than 8% by mass, preferably 5% by mass or less, more preferably 3% by mass or less, still more preferably 2% by mass or less, most preferably 1% by mass or less.

When the content of the fluoroimide salt (s) is in this range, a nonaqueous electrolytic solution secondary battery is likely to exhibit a sufficient cycle characteristics-improving effect, and a situation where the high-temperature storage characteristics are deteriorated and the amount of gas generation is thereby increased and the discharge capacity retention rate is reduced is likely to be avoided.

### (Oxalate Salt)

An oxalate salt is preferred since it is capable of reacting with a decomposition product of the compound represented by Formula (A) or (α) in a preferred manner to form a composite coating film and thereby reduce the initial battery resistance.

A counter cation of the oxalate salt is not particularly limited, and examples thereof include lithium, sodium, potassium, rubidium, cesium, magnesium, calcium, barium, and ammonium represented by NR³⁵R³⁶R³⁷R³⁸ (wherein, R³⁵ to R³⁸ each independently represent a hydrogen atom or an organic group having 1 to 12 carbon atoms). Thereamong, lithium is preferred.

The organic group having 1 to 12 carbon atoms that is represented by R³⁵ to R³⁸ of the above-described ammonium is not particularly limited, and examples thereof include alkyl groups optionally substituted with a halogen atom, cycloalkyl groups optionally substituted with a halogen atom or an alkyl group, aryl groups optionally substituted with a halogen atom or an alkyl group, and nitrogen atom-containing heterocyclic groups optionally having a substituent. Thereamong, R³⁵ to R³⁸ are preferably each independently a hydrogen atom, an alkyl group, a cycloalkyl group, or a nitrogen atom-containing heterocyclic group.

Specific examples of the oxalate salt include lithium bis(oxalato)borate, lithium tetrafluoro(oxalato)phosphate, lithium difluorobis(oxalato)phosphate, and lithium tris(oxalato)phosphate, among which lithium bis(oxalato)borate and lithium difluorobis(oxalato)phosphate are preferred, and lithium bis(oxalato)borate is particularly preferred.

Any of these oxalate salts may be used singly, or two or more thereof may be used in any combination at any ratio. The content of the oxalate salt(s) with respect to a total amount of the nonaqueous electrolytic solution is not particularly limited and may be set arbitrarily as long as the effects of the present invention are not markedly impaired; however, it is usually not less than 0.001% by mass, preferably not less than 0.01% by mass, more preferably not less than 0.1% by mass, but usually less than 8% by mass, preferably 5% by mass or less, more preferably 3% by mass or less, still more preferably 2% by mass or less, most preferably 1% by mass or less.

When the content of the oxalate salt(s) is in this range, not only the effect of reducing the initial battery resistance is enhanced and a nonaqueous electrolytic solution secondary battery is likely to exhibit a sufficient cycle characteristics-improving effect, but also a situation where the high-temperature storage characteristics are deteriorated and the amount of gas generation is thereby increased and the discharge capacity retention rate is reduced is likely to be avoided.

### (Fluorosilane Compound)

A fluorosilane compound is preferred since it is capable of reacting with a decomposition product of the compound represented by Formula (A) or (α) in a preferred manner to form a composite coating film and thereby reduce the initial battery resistance.

The nonaqueous electrolytic solution according to the present embodiment may also contain a fluorosilane compound. The fluorosilane compound is not particularly limited as long as it is a compound having at least one silicon-fluorine bond (Si-F bond) in the molecule.

Examples of the fluorosilane compound include fluorotrimethylsilane, dimethyl(fluoro)(vinyl)silane, (allyl)dimethyl(fluoro)silane, dimethyl(fluoro)(propargyl)silane, divinylfluoro(methyl)silane, fluorotrivinylsilane, ethynyldimethylfluorosilane, difluorodimethylsilane, difluorodivinylsilane, methyltrifluorosilane, trifluorovinylsilane, fluorotriethylsilane, diethyl(fluoro)(methyl)silane, diethyl(fluoro)(vinyl)silane, ethyldivinylfluorosilane, diethyl(fluoro)(ethynyl)silane, (allyl)diethyl(fluoro)silane, diethyl(fluoro)(propargyl)silane, difluorodiethylsilane, ethyldifluorovinylsilane, trifluoroethylsilane, fluorotripropylsilane, trifluoropropylsilane, fluorotributylsilane, trifluorobutylsilane, fluorotripentylsilane, trifluoropentylsilane, fluorotrihexylsilane, trifluorohexylsilane, fluorotricyclohexylsilane, trifluorocyclohexylsilane, fluorotriphenylsilane, fluorotritoluylsilane, fluorotribenzylsilane, difluorodinaphthylsilane, naphthyltrifluorosilane, dibiphenyldifluorosilane, biphenyltrifluorosilane, (cyclohexylphenyl)trifluorosilane, di(cyclohexylphenyl)difluorosilane, fluorotri(biphenyl)silane, and fluorotri(cyclohexylphenyl)silane.

Thereamong, fluorotrimethylsilane, dimethyl(fluoro)(vinyl)silane, dimethyldifluorosilane, and methyl(difluoro)(vinyl)silane are preferred.

Any of these fluorosilane compounds may be used singly, or two or more thereof may be used in any combination at any ratio . The content of the fluorosilane compound (a total content when two or more fluorosilane compounds are used) with respect to a total amount of the nonaqueous electrolytic solution is usually not less than 0.001% by mass, preferably not less than 0.01% by mass, more preferably not less than 0.1% by mass, but usually 3% by mass or less, preferably 1% by mass or less, more preferably 0.5% by mass or less. When the content of the fluorosilane compound is in this range, the effect of reducing the initial battery resistance is enhanced, and it is easy to control the output characteristics, the load characteristics, the low-temperature characteristics, the cyclic characteristics, and the high-temperature storage characteristics, and the like.

### (Unsaturated Cyclic Carbonate)

The term "unsaturated cyclic carbonate" used herein refers to a cyclic carbonate having an unsaturated carbon-carbon bond. The unsaturated cyclic carbonate is not particularly limited as long as it is a carbonate that has an unsaturated carbon-carbon bond, such as a carbon-carbon double bond or a carbon-carbon triple bond, and any such unsaturated cyclic carbonate can be used.

The unsaturated cyclic carbonate may be, for example, a vinylene carbonate, or an ethylene carbonate substituted with a substituent having an unsaturated carbon-carbon bond.

Specific examples of the vinylene carbonate include vinylene carbonate, methylvinylene carbonate, and 4,5-dimethylvinylene carbonate.

Specific examples of the ethylene carbonate substituted with a substituent having an unsaturated carbon-carbon bond include vinylethylene carbonate, 4,5-divinylethylene carbonate, ethynylethylene carbonate, and propargylethylene carbonate.

Thereamong, vinylene carbonate, vinylethylene carbonate, and ethynylethylene carbonate are preferred and, particularly, vinylene carbonate can contribute to the formation of a stable film-like structure and is thus more preferably used.

The molecular weight of the unsaturated cyclic carbonate is not particularly limited and may be set arbitrarily as long as the effects of the present invention are not markedly impaired; however, it is usually 50 or higher, preferably 80 or higher, but preferably 250 or lower, preferably 150 or lower. When the molecular weight is in this range, a solubility of the unsaturated cyclic carbonate in the nonaqueous electrolytic solution is likely to be ensured, so that the effects of the present invention are likely to be expressed sufficiently.

Any of the above-described unsaturated cyclic carbonates may be used singly, or two or more thereof may be used in any combination at any ratio. The content of the unsaturated cyclic carbonate(s) is not particularly limited and may be set arbitrarily as long as the effects of the present invention are not markedly impaired; however, it is usually not less than 0.001% by mass, preferably not less than 0.01% by mass, more preferably not less than 0.1% by mass, still more preferably not less than 0.2% by mass, but usually 10% by mass or less, preferably 8% by mass or less, more preferably 5% by mass or less, with respect to a total amount of the nonaqueous electrolytic solution. When the content of the unsaturated cyclic carbonate(s) is in this range, the effect of reducing the initial resistance of a nonaqueous electrolytic solution secondary battery is enhanced, and sufficient high-temperature storage characteristics and an effect of improving the cycle characteristics are likely to be expressed.

### (Fluorinated Cyclic Carbonate)

The term "fluorinated cyclic carbonate" used herein refers to a cyclic carbonate having a fluorine atom.

Examples of the fluorinated cyclic carbonate include derivatives of a cyclic carbonate having an alkylene group having 2 to 6 carbon atoms, such as ethylene carbonate derivatives. Examples of the ethylene carbonate derivatives include fluorinated products of ethylene carbonate or ethylene carbonate substituted with an alkyl group (e.g., an alkyl group having 1 to 4 carbon atoms), among which those having 1 to 8 fluorine atoms are preferred.

Specific examples thereof include monofluoroethylene carbonate, 4,4-difluoroethylene carbonate, 4,5-difluoroethylene carbonate, 4-fluoro-4-methylethylene carbonate, 4,5-difluoro-4-methylethylene carbonate, 4-fluoro-5-methylethylene carbonate, 4,4-difluoro-5-methylethylene carbonate, 4-(fluoromethyl)-ethylene carbonate, 4-(difluoromethyl)-ethylene carbonate, 4-(trifluoromethyl)-ethylene carbonate, 4-(fluoromethyl)-4-fluoroethylene carbonate, 4-(fluoromethyl)-5-fluoroethylene carbonate, 4-fluoro-4,5-dimethylethylene carbonate, 4,5-difluoro-4,5-dimethylethylene carbonate, and 4,4-difluoro-5,5-dimethylethylene carbonate.

Thereamong, at least one selected from the group consisting of monofluoroethylene carbonate, 4,4-difluoroethylene carbonate, 4,5-difluoroethylene carbonate, and 4,5-difluoro-4,5-dimethylethylene carbonate is preferred from the standpoints of imparting the nonaqueous electrolytic solution with a high ionic conductivity and forming an interface protective film in a preferred manner.

Any of the above-described fluorinated cyclic carbonates may be used singly, or two or more thereof may be used in any combination at any ratio.

It is noted here that the fluorinated cyclic carbonate may be used as an auxiliary agent or a nonaqueous solvent of the nonaqueous electrolytic solution. When the fluorinated cyclic carbonate used as a nonaqueous solvent, the content thereof is usually not less than 8% by mass, preferably not less than 10% by mass, more preferably not less than 12% by mass, but usually 85% by mass or less, preferably 80% by mass or less, more preferably 75% by mass or less, with respect to a total amount of the nonaqueous electrolytic solution. When the content of the fluorinated cyclic carbonate is in this range, not only the effect of reducing the initial resistance of a nonaqueous electrolytic solution secondary battery is enhanced, but also a sufficient effect of improving the cycle characteristics is likely to be expressed and a reduction in the discharge capacity retention rate is likely to be avoided.

In the nonaqueous electrolytic solution according to one embodiment of the present invention, the above-described unsaturated cyclic carbonate or fluorinated cyclic carbonate is preferably at least one selected from the group consisting of vinylene carbonate, vinylethylene carbonate, ethynylethylene carbonate, and fluoroethylene carbonate.

As the fluorinated cyclic carbonate, a cyclic carbonate having an unsaturated bond and a fluorine atom (hereinafter, may be simply referred to as "fluorinated unsaturated cyclic carbonate") can be used. The fluorinated unsaturated cyclic carbonate is not particularly limited. Particularly, one having 1 or 2 fluorine atoms is preferred. A method of producing the fluorinated unsaturated cyclic carbonate is not particularly limited, and any known method can be selected to produce the fluorinated unsaturated cyclic carbonate.

The fluorinated unsaturated cyclic carbonate is, for example, a vinylene carbonate derivative, or an ethylene carbonate derivative substituted with a substituent having an aromatic ring or an unsaturated carbon-carbon bond.

Examples of the vinylene carbonate derivative include 4-fluorovinylene carbonate, 4-fluoro-5-methylvinylene carbonate, 4-fluoro-5-phenylvinylene carbonate, and 4,5-difluoroethylene carbonate.

Examples of the ethylene carbonate derivative substituted with a substituent having an aromatic ring or an unsaturated carbon-carbon bond include 4-fluoro-4-vinylethylene carbonate, 4-fluoro-5-vinylethylene carbonate, 4,4-difluoro-4-vinylethylene carbonate, 4,5-difluoro-4-vinylethylene carbonate, 4-fluoro-4,5-divinylethylene carbonate, 4,5-difluoro-4,5-divinylethylene carbonate, 4-fluoro-4-phenylethylene carbonate, 4-fluoro-5-phenylethylene carbonate, 4,4-difluoro-5-phenylethylene carbonate, and 4,5-difluoro-4-phenylethylene carbonate.

The molecular weight of the fluorinated unsaturated cyclic carbonate is not particularly limited and may be set arbitrarily as long as the effects of the present invention are not markedly impaired; however, it is usually 50 or higher, preferably 80 or higher, but preferably 250 or lower, preferably 150 or lower. When the molecular weight is in this range, a solubility of the fluorinated cyclic carbonate in the nonaqueous electrolytic solution is likely to be ensured, so that the effects of the present invention are likely to be expressed.

Any of the above-described fluorinated unsaturated cyclic carbonates may be used singly, or two or more thereof may be used in any combination at any ratio. The amount of the fluorinated unsaturated cyclic carbonate(s) to be incorporated is not particularly limited and may be set arbitrarily as long as the effects of the present invention are not markedly impaired; however, it is usually not less than 0.01% by mass, preferably not less than 0.1% by mass, more preferably not less than 0.2% by mass, but usually 5% by mass or less, preferably 4% by mass or less, more preferably 3% by mass or less, with respect to a total amount of the nonaqueous electrolytic solution. When the content of the fluorinated unsaturated cyclic carbonate(s) is in this range, the effect of reducing the initial resistance of a nonaqueous electrolytic solution secondary battery is enhanced, and a sufficient effect of improving the cycle characteristics is likely to be expressed.

The content of an auxiliary agent other than the above-described fluorinated salt, fluorosilane compound, unsaturated cyclic carbonate, fluorinated cyclic carbonate, and oxalate salt (the content of other auxiliary agent) is not particularly limited and may be set arbitrarily as long as the effects of the present invention are not markedly impaired; however, it is usually not less than 0.01% by mass, preferably not less than 0.1% by mass, more preferably not less than 0.2% by mass, but usually 5% by mass or less, preferably 3% by mass or less, more preferably 1% by mass or less, with respect to a total amount of the nonaqueous electrolytic solution. When the content of other auxiliary agent is in this range, the effects of the other auxiliary agent are likely to be expressed sufficiently, so that the high-temperature storage stability tends to be improved. When two or more other auxiliary agents are used in combination, a total amount thereof should satisfy the above-described range.

### <2. Nonaqueous Electrolytic Solution Battery>

The nonaqueous electrolytic solution battery according to one embodiment of the present invention is a nonaqueous electrolytic solution battery that includes a positive electrode, a negative electrode, and a nonaqueous electrolytic solution which is the above-described nonaqueous electrolytic solution according to one embodiment of the present invention. More particularly, the nonaqueous electrolytic solution battery according to one embodiment of the present invention includes: a positive electrode which includes a current collector and a positive electrode active material layer on at least a portion of the surface of the current collector, and is capable of occluding and releasing metal ions; a negative electrode which includes a current collector and a negative electrode active material layer on at least a portion of the surface of the current collector, and is capable of occluding and releasing metal ions; and a nonaqueous electrolytic solution which contains the above-described compound represented by Formula (1) and compound represented by Formula (α) along with an alkali metal salt and a nonaqueous solvent.

### <2-1. Battery Configuration>

The nonaqueous electrolytic solution battery of the present embodiment has the same configuration as that of a conventionally known nonaqueous electrolytic solution battery, except for the above-described nonaqueous electrolytic solution. The nonaqueous electrolytic solution battery usually has a form in which the positive electrode and the negative electrode are laminated via a porous membrane (separator) impregnated with the nonaqueous electrolytic solution, and these components are housed in a casing (outer package).

The shape of the nonaqueous electrolytic solution battery of the present embodiment is not particularly limited and may be any of, for example, a cylindrical shape, a prismatic shape, a laminated shape, a coin shape, and a large-sized shape.

### <2-2. Nonaqueous Electrolytic Solution>

As the nonaqueous electrolytic solution, the above-described nonaqueous electrolytic solution according to one embodiment of the present invention is used. It is noted here that the above-described nonaqueous electrolytic solution can also be blended with other nonaqueous electrolytic solution within a range that does not depart from the gist of the present invention.

### <2-3. Positive Electrode>

The "positive electrode" refers to an electrode which includes a current collector and a positive electrode active material on at least a portion of the surface of the current collector. As for other constitutions, conventionally known constitutions can be employed.

The positive electrode active material is not particularly limited as long as it is lithium cobaltate, or a transition metal oxide containing at least Ni and Co in which Ni and Co account for not less than 50% by mole of transition metals and which is capable of electrochemically occluding and releasing metal ions, and the positive electrode active material is preferably, for example, a transition metal oxide which is capable of electrochemically occluding and releasing lithium ions and contains lithium along with at least Ni and Co and in which Ni and Co account for not less than 60% by mole of transition metals. Ni and Co have a redox potential suitable for the use as positive electrode materials of a secondary battery, and are thus appropriate for high-capacity applications.

Particularly, a mode in which the positive electrode active material is a transition metal oxide represented by the following composition formula (11) is preferred:

Liₐ₁Ni_{b1}Co_{c1}M_{d1}O₂ (11)

In the composition formula (11), a1, b1, c1, and d1 represent numerical values of 0.90 ≤ a1 ≤ 1.10, 0.50 ≤ b1 ≤ 0.98, 0.01 ≤ c1 < 0.50, and 0.01 ≤ d1 < 0.50, satisfying b1 + c1 + d1 = 1; and M represents at least one element selected from the group consisting of Mn, Al, Mg, Zr, Fe, Ti, and Er.

In the composition formula (11), d1 preferably represents a numerical value of 0.1 ≤ d1 < 0.5.

It is advantageous to control the composition ratios of Ni, Co, and other metal species in the above-described respective ranges since this makes the transition metals unlikely to elute out of the positive electrode and, even if they did, Ni and Co would have only a small adverse effect inside the nonaqueous secondary battery.

Preferred specific examples include LiNi_{0.85}Co_{0.10}Al_{0.05}O₂, LiNi_{0.80}Co_{0.15}Al_{0.05}O₂, LiNi_{0.5}Co_{0.2}Mn_{0.3}O₂, Li_{1.05}Ni_{0.50}Co_{0.20}Mn_{0.30}O₂, LiNi_{0.6}Co_{0.2}Mn_{0.2}O₂, and LiNi_{0.8}Co_{0.1}Mn_{0.1}O₂.

### <2-4. Negative Electrode>

The "negative electrode" refers to an electrode which includes a current collector and a negative electrode active material on at least a portion of the surface of the current collector. As for other constitutions, conventionally known constitutions can be employed.

The negative electrode active material is not particularly limited as long as it is capable of electrochemically occluding and releasing metal ions. Specific examples of the negative electrode active material include carbon-based materials, materials containing a Li-alloyable metal element and/or metalloid element, lithium-containing metal composite oxide materials, and mixtures of these materials. Any of these materials may be used singly, or two or more thereof may be used in any combination. From the standpoint of obtaining good cycle characteristics and good safety as well as excellent continuous charging characteristics, it is preferred to use a carbon-based material, or a mixture of graphite particles and a material containing Li-alloyable metal particles and a Li-alloyable metal element and/or metalloid element.

Examples of the carbon-based material include natural graphite, artificial graphite, amorphous carbon, carbon-coated graphite, graphite-coated graphite, and resin-coated graphite. Thereamong, natural graphite is preferred.

Examples of the natural graphite include scaly graphite, flake graphite, and graphite particles obtained by performing a treatment, such as spheronization or densification, on any of these graphites as a raw material.

Thereamong, spherical or ellipsoidal graphite particles obtained by a spheronization treatment are particularly preferred from the standpoint of the packing property of the particles or the charge-discharge rate characteristics.

The average particle size (d50) of the graphite particles is usually 1 um to 100 um.

As the material containing a Li-alloyable metal element and/or metalloid element, any conventionally known such material can be used; however, from the standpoints of the capacity and the cycle life, the metal prticles is preferably one which contains a metal element selected from the group consisting of Sb, Si, Sn, Al, As, and Zn, and/or a metalloid element. Further, when the material containing a Li-alloyable metal element and/or metalloid element contains two or more metal elements and/or metalloid elements, the material may be a material composed of an alloy of these metal elements and/or metalloid elements.

Examples of the material containing a Li-alloyable metal element and/or metalloid element include metal oxides, metal nitrides, metal carbides, and Si-containing inorganic compounds. These compounds may contain two or more materials containing a Li-alloyable metal element and/or metalloid element.

Particularly, from the standpoint of increasing the capacity, Si metal (hereinafter, may be referred to as "Si") or an Si-containing inorganic compound is preferred.

The material containing a Li-alloyable metal element and/or metalloid element may already be alloyed with Li at the time of the production of the below-described negative electrode, and it is preferably Si or an Si-containing inorganic compound from the standpoint of increasing the capacity.

In the present specification, Si and an Si-containing inorganic compound are collectively referred to as "Si compound" . Specific examples of an Si compound include SiOₓ (0 ≤ x ≤ 2) . Specific examples of the material containing a Li-alloyable metal element and/or metalloid element include Li_{y}Si (0 < y ≤ 4.4) and Li_{2z}SiO_{2+z} (0 < z ≤ 2) . The Si compound is preferably an Si oxide (SiOₓ, 0 < x ≤ 2) because of its higher theoretical capacity than graphite, or amorphous Si or nano-sized Si crystals from the standpoint of facilitating the migration of alkali ions such as lithium ions to obtain a high capacity.

The mixture of graphite particles and a material containing Li-alloyable metal particles and a Li-alloyable metal element and/or metalloid element, which is used as the negative electrode active material, may be a mixture in which the above-described material containing a Li-alloyable metal element and/or metalloid element and the above-described graphite particles are mixed in a state of mutually independent particles, or may be a composite in which the material containing a Li-alloyable metal element and/or metalloid element exists on the surface or the inside of the graphite particles.

The content ratio of the material containing a Li-alloyable metal element and/or metalloid element is usually 0.1% by mass or higher, preferably 0.5% by mass or higher, more preferably 1.0% by mass or higher, still more preferably 2.0% by mass or higher, but usually 99% by mass or lower, preferably 50% by mass or lower, more preferably 40% by mass or lower, still more preferably 30% by mass or lower, yet still more preferably 25% by mass or lower, further preferably 20% by mass or lower, particularly preferably 15% by mass or lower, most preferably 10% by mass or lower, with respect to a total amount of the graphite particles and the material containing a Li-alloyable metal element and/or metalloid element.

### <2-5. Separator>

A separator is usually arranged between the positive electrode and the negative electrode for the purpose of inhibiting a short circuit. In this case, the separator is usually impregnated with the nonaqueous electrolytic solution according to one embodiment of the present invention. As the separator, any conventionally known separator can be used.

### EXAMPLES

The present invention will now be described more concretely by way of Examples and Reference Examples; however, the present invention is not limited to the below-described Examples within the gist of the present invention.

Compounds used in the following Examples and Comparative Examples are shown below.

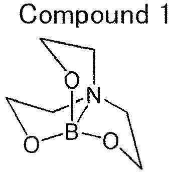

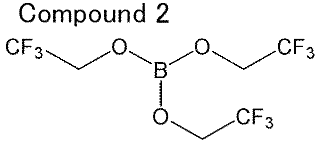

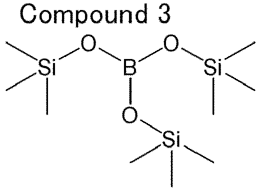

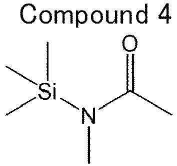

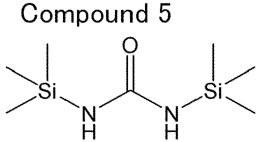

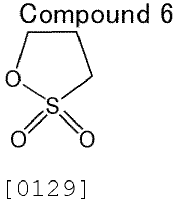

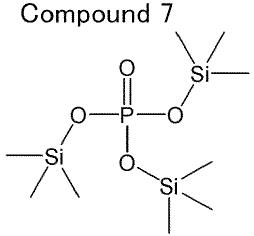

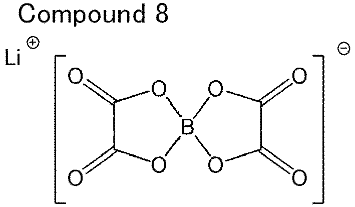

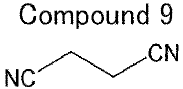

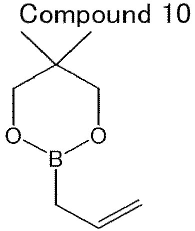

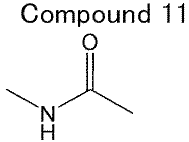

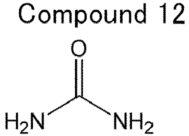

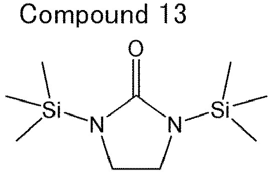

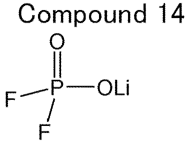

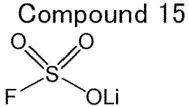

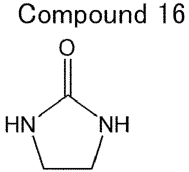

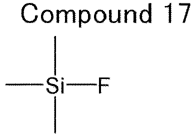

### <Examples 1 to 23 and Comparative Examples 1 to 21>

### [Production of Positive Electrode]

A slurry was prepared by mixing 90 parts by mass of lithium-nickel-cobalt-manganese composite oxide (Li_{1.0}Ni_{0.5}Co_{0.2}Mn_{0.3}O₂) as a positive electrode active material, 7 parts by mass of acetylene black as a conductive material, and 3 parts by mass of polyvinylidene fluoride (PVdF) as a binder in an N-methylpyrrolidone solvent using a disperser. This slurry was uniformly applied and dried onto a 15 um-thick aluminum foil, and this aluminum foil was subsequently pressed to produce a positive electrode.

### [Production of Negative Electrode]

To 98 parts by mass of natural graphite, 1 part by mass of an aqueous dispersion of sodium carboxymethyl cellulose (concentration of sodium carboxymethyl cellulose = 1% by mass) and 1 part by mass of an aqueous dispersion of a styrene-butadiene rubber (concentration of styrene-butadiene rubber = 50% by mass) were added as a thickening agent and a binder, respectively, and these materials were mixed using a disperser to prepare a slurry. The thus obtained slurry was applied and dried onto one side of a 10 um-thick copper foil, and this copper foil was subsequently pressed to produce a negative electrode.

### [Preparation of Nonaqueous Electrolytic Solutions]

Under a dry argon atmosphere, thoroughly-dried LiPF₆ was dissolved as an electrolyte at 1.2 mol/L (14.8% by mass in terms of the concentration in the resulting nonaqueous electrolytic solution) in a mixture of ethylene carbonate (EC), diethyl carbonate (DEC), and ethyl methyl carbonate (EMC) (volume ratio EC:DEC:EMC = 3:3:4) . Subsequently, vinylene carbonate (VC) and fluoroethylene carbonate (FEC) were further added each in an amount of 2.0% by mass (in terms of the concentration in the resulting nonaqueous electrolytic solution) (the resultant is hereinafter referred to as "reference electrolytic solution 1") . To the thus obtained reference electrolytic solution 1, the compounds 1 to 17 were added in the respective amounts shown in Table 1 below to prepare nonaqueous electrolytic solutions of Examples 1 to 17 and Comparative Examples 2 to 18. As the nonaqueous electrolytic solution of Comparative Example 1, the reference electrolytic solution 1 itself was used. It is noted here that, in Table 1, "Content (% by mass) " indicates an amount contained in a total of 100% by mass of each nonaqueous electrolytic solution.

### [Production of Nonaqueous Electrolytic Solution Batteries]

A battery element was prepared by laminating the above-obtained positive electrode and negative electrode along with a polyetylene separator in the order of the negative electrode, the separator, and the positive electrode. This battery element was inserted into a pouch made of a laminated film obtained by covering both sides of an aluminum sheet (thickness: 40 um) with a resin layer, with the terminals of the positive and negative electrodes protruding out of the pouch. Thereafter, the above-prepared nonaqueous electrolytic solutions were each injected into the pouch, and the pouch was subsequently vacuum-sealed, whereby laminate-type nonaqueous electrolytic solution batteries were produced.

### <Evaluation of Nonaqueous Electrolytic Solution Batteries>

### [Initial Conditioning]

In a 25°C thermostat chamber, the above-produced laminate-type nonaqueous electrolytic solution batteries were each charged for 6 hours at a constant current equivalent to 0.05 C and then discharged to 3.0 V at 0.2 C. Subsequently, each laminate-type battery was subjected to CC-CV charging up to 4.1 V at 0.2 C. The laminate-type battery was then aged at 45°C for 72 hours, after which the battery was discharged to 3.0 V at 0.2 C and stabilized. Thereafter, the laminate-type battery was CC-CV charged to 4.2 V at 0.2 C and then discharged to 3.0 V at 0.2 C, whereby initial conditioning was completed.

### [Measurement of Amount of Gas Generated during Initial Conditioning]

After the initial conditioning, each battery was immersed in an ethanol bath to measure the volume, and the amount of generated gas was determined from the volume change before and after the initial conditioning and defined as "initial gas amount".

### [Initial Resistance]

After the initial conditioning, each battery was CC-CV charged at 0.2 C such that the battery had a half of the initial discharge capacity. This battery was discharged at each current value of 1.0 C, 2.0 C and 3.0 C at 25°C, and the voltage was measured at a point of 5 seconds into each discharging process. An average value of the slopes of the thus obtained current-voltage straight lines at 1.0 C, 2.0 C and 3.0 C was defined as "initial resistance" .

Table 1 below shows the values of the initial gas amount and the initial resistance, taking those of Comparative Example 1 as 100.

It is noted here that "Compound (A) " indicates a compound represented by Formula (A) ; "Compound (α)" indicates a compound represented by Formula (α) ; "Compound (α1)" indicates a compound represented by Formula (α1); "Compound (α2)" indicates a compound represented by Formula (α2); and "Other compound" indicates a compound different from those represented by Formula (A) or (α) .

[Table 1-1]

**Table 1**

| | Compound (A) | Content wt% | Compound (α) | | | | Other compound | Content wt% |
|---|---|---|---|---|---|---|---|---|
| | | | Compound (α1) | Content wt% | Compound (α2) | Content wt% | | |
| Example 1 | Compound 1 | 1.0 | Compound 4 | 0.1 | - | - | - | - |
| Example 2 | Compound 1 | 1.0 | Compound 5 | 0.1 | - | - | - | - |
| Example 3 | Compound 2 | 1.0 | Compound 5 | 0.1 | - | - | - | - |
| Example 4 | Compound 3 | 1.0 | Compound 4 | 0.1 | - | - | - | - |
| Example 5 | Compound 3 | 1.0 | Compound 4 | 0.3 | - | - | - | - |
| Example 6 | Compound 3 | 1.0 | Compound 5 | 0.1 | - | - | - | - |
| Example 7 | Compound 3 | 1.0 | Compound 5 | 0.3 | - | - | - | - |
| Example 8 | Compound 3 | 1.0 | Compound 4 | 0.3 | - | - | Compound 14 | 1.0 |
| Example 9 | Compound 3 | 1.0 | Compound 5 | 0.3 | - | - | Compound 14 | 1.0 |
| Example 10 | Compound 3 | 1.0 | Compound 4 | 0.3 | - | - | Compound 15 | 1.0 |
| Example 11 | Compound 3 | 1.0 | Compound 5 | 0.3 | - | - | Compound 15 | 1.0 |
| Example 12 | Compound 1 | 1.0 | - | - | Compound 11 | 0.1 | - | - |
| Example 13 | Compound 3 | 1.0 | - | - | Compound 11 | 0.1 | - | - |
| Example 14 | Compound 3 | 1.0 | - | - | Compound 12 | 0.1 | - | - |
| Example 15 | Compound 3 | 1.0 | - | - | Compound 13 | 0.1 | - | - |
| Example 16 | Compound 3 | 1.0 | - | - | Compound 16 | 0.1 | - | - |
| Example 17 | Compound 1 | 1.0 | - | - | Compound 11 | 0.05 | - | - |
| Example 18 | Compound 1 | 1.0 | - | - | Compound 11 | 0.05 | Compound 17 | 003 |
| Example 19 | Compound 1 | 1.0 | Compound 5 | 0.05 | Compound 12 | 0.05 | - | - |
| Example 20 | Compound 3 | 1.0 | Compound 4 | 0.05 | Compound 11 | 0.05 | - | - |
| Example 21 | Compound 3 | 1.0 | - | - | Compound 11 | 0.05 | Compound 17 | 003 |
| Example 22 | Compound 3 | 1.0 | Compound 5 | 0.05 | Compound 12 | 0.05 | - | - |
| Example 23 | Compound 3 | 1.0 | - | - | Compound 12 | 0.05 | Compound 17 | 003 |
| Comparative Example 1 | | | - - | - - | - | - | - | - |
| Comparative Example 2 | Compound 1 | 1.0 | - | - | - | - | - | - |
| Comparative Example 3 | - | - | Compound 4 | 0.1 | - | - | - | - |
| Comparative Example 4 | - | - | Compound 5 | 0.1 | - | - | - | - |
| Comparative Example 5 | - | - | Compound 4 | 0.3 | - | - | - | - |
| Comparative Example 6 | - | - | Compound 5 | 0.3 | - | - | - | - |
| Comparative Example 7 | Compound 1 | 1.0 | - | - | - | - | Compound 6 | 1.0 |
| Comparative Example 8 | Compound 1 | 1.0 | - | - | - | - | Compound 6 | 0.1 |
| Comparative Example 9 | Compound 2 | 1.0 | - | - | - | - | - | - |
| Comparative Example 10 | - | - | Compound 4 | 0.3 | - | - | Compound 7 | 1.0 |
| Comparative Example 11 | - | - | Compound 4 | 0.3 | - | - | Compound 8 | 1.0 |
| Comparative Example 12 | - | - | Compound 4 | 0.3 | - | - | Compound 9 | 1.0 |
| Comparative Example 13 | Compound 3 | 1.0 | - | - | - | - | - | - |
| Comparative Example 14 | - | - | Compound 4 | 0.3 | - | - | Compound 10 | 1.0 |
| Comparative Example 15 | - | - | Compound 5 | 0.3 | - | - | Compound 10 | 1.0 |
| Comparative Example 16 | - | - | - | - | Compound 11 | 0.1 | - | - |
| Comparative Example 17 | - | - | - | - | Compound 12 | 0.1 | - | - |
| Comparative Example 18 | - | - | - | - | Compound 13 | 0.1 | - | - |
| Comparative Example 19 | - | - | - | - | Compound 16 | 0.1 | - | - |
| Comparative Example 20 | - | - | - | - | - | - | Compound 14 | 1.0 |
| Comparative Example 21 | - | - | - | - | - | - | Compound 15 | 1.0 |

[Table 1-2]

**Table 1**

| | Initial gas | Initial resistance |
|---|---|---|
| Example 1 | 35 | 92 |
| Example 2 | 54 | 92 |
| Example 3 | 52 | 92 |
| Example 4 | 63 | 92 |
| Example 5 | 76 | 96 |
| Example 6 | 46 | 94 |
| Example 7 | 91 | 90 |
| Example 8 | 77 | 70 |
| Example 9 | 53 | 68 |
| Example 10 | 89 | 69 |
| Example 11 | 87 | 70 |
| Example 12 | 91 | 97 |
| Example 13 | 58 | 80 |
| Example 14 | 74 | 80 |
| Example 15 | 81 | 76 |
| Example 16 | 42 | 97 |
| Example 17 | 78 | 95 |
| Example 18 | 73 | 90 |
| Example 19 | 94 | 91 |
| Example 20 | 80 | 73 |
| Example 21 | 52 | 76 |
| Example 22 | 74 | 74 |
| Example 23 | 62 | 76 |
| Comparative Example 1 | 100 | 100 |
| Comparative Example 2 | 101 | 119 |
| Comparative Example 3 | 103 | 100 |
| Comparative Example 4 | 206 | 100 |
| Comparative Example 5 | 133 | 101 |
| Comparative Example 6 | 140 | 101 |
| Comparative Example 7 | 115 | 123 |
| Comparative Example 8 | 162 | 123 |
| Comparative Example 9 | 124 | 101 |
| Comparative Example 10 | 175 | 97 |
| Comparative Example 11 | 106 | 105 |
| Comparative Example 12 | 123 | 110 |
| Comparative Example 13 | 110 | 97 |
| Comparative Example 14 | 138 | 116 |
| Comparative Example 15 | 175 | 116 |
| Comparative Example 16 | 106 | 101 |
| Comparative Example 17 | 215 | 106 |
| Comparative Example 18 | 118 | 100 |
| Comparative Example 19 | 135 | 103 |
| Comparative Example 20 | 100 | 98 |
| Comparative Example 21 | 104 | 95 |

From Table 1, it is seen that the batteries produced in Examples 1 to 23 had a smaller initial gas amount and a lower initial resistance than the batteries produced in Comparative Examples 1 to 21.

Comparing Comparative Example 1 with Comparative Examples 2, 7, 8, 9, and 13, it is seen that, in those cases where a nonaqueous electrolytic solution containing only a B-O structure-containing compound represented by Formula (A) without a compound represented by Formula (α) was used, the initial gas amount tended to be larger and the initial resistance tended to be higher than in Comparative Example 1. In addition, comparing Comparative Example 1 with Comparative Examples 3 to 6, 10 to 12, and 14 to 19, in those cases where a nonaqueous electrolytic solution containing only a compound represented by Formula (α) without a B-O structure-containing compound represented by Formula (A) was used, the initial gas amount tended to be larger and the initial resistance tended to be higher than in Comparative Example 1. From these results, the initial gas amount of a battery is expected to be increased by using a nonaqueous electrolytic solution containing both a B-O structure-containing compound represented by Formula (A) and a compound represented by Formula (α); however, the initial gas amount and the initial resistance were reduced in Examples 1 to 23, which was an unexpected marked effect.

Further, in Comparative Examples 7 and 8 where a B-O structure-containing compound represented by Formula (A) and a compound not corresponding to a compound represented by Formula (α) were used in combination, the initial gas amount was increased by 15 to 62% relative to Comparative Example 1.

Moreover, it is seen that, in the batteries produced in Comparative Examples 10 to 12 where a compound represented by Formula (α) was used in combination with other compound different from both compounds (A) and (α), an effect of improving the initial gas amount and the initial resistance, which was observed in the batteries of Examples, was not obtained. In addition, also in the batteries produced in Comparative Examples 14 and 15 where a B-O structure-containing compound different from a compound (A) was used in combination with a compound represented by Formula (α), an effect of improving the initial gas amount and the initial resistance, which was observed in the batteries of Examples, was not obtained.

Comparing Examples 19, 20, and 22 with Comparative Example 1, it is seen that the effect of improving the initial gas amount and the initial resistance is also obtained by incorporating a compound (A), a compound (α1), and a compound (α2). In addition, it is seen that an enhanced effect of improving the initial resistance is obtained when a boron-containing chain compound such as the compound 3 is used.

Comparing Examples 5 and 7 with Examples 8 to 11, it is seen that the effect of improving the initial resistance is further enhanced by incorporating a fluorinated salt such as the compound 14 or 15. This is said to be a marked effect that is unexpected from the results of Comparative Examples 20 and 21 where the compound 14 or 15 was used with neither of compounds (A) and (α).

Comparing Example 17 with Example 18, it is seen that the effect of improving the initial gas amount and the initial resistance is further enhanced by incorporating a fluorosilane compound such as the compound 17.

In the batteries of Examples, a compound represented by Formula (α) and a B-O structure-containing compound represented by Formula (A) adsorb to the positive electrode active material and/or the negative electrode active material in large amounts after the injection; therefore, it is presumed that these compounds localized on the electrode(s) are electrochemically decomposed during initial charging to form a composite insulating coating film on the surface of the positive electrode active material and/or the surface of the negative electrode active material.

Consequently, by using a combination of a compound having a structure represented by Formula (α) and a B-O structure-containing compound represented by Formula (A), adsorption of these compounds to electrodes can be controlled, so that an increase in the initial gas generation and the battery resistance can be controlled in a preferred manner.

## Claims

1. A nonaqueous electrolytic solution for a nonaqueous electrolytic solution battery comprising a positive electrode and a negative electrode that are capable of occluding and releasing metal ions,
wherein the nonaqueous electrolytic solution comprises a compound represented by Formula (A) and a compound represented by Formula (α) along with an alkali metal salt and a nonaqueous solvent: 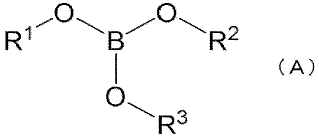
wherein, R¹ to R³ each independently represent a hydrocarbon group having 1 to 10 carbon atoms and optionally having a heteroatom, or a trialkylsilyl group; and R¹ to R³ are optionally bound to each other to form a ring, 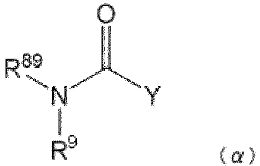
wherein, R⁸⁹ represents a hydrogen atom or a silyl group represented by -SiR⁶R⁷R⁸; R⁶ to R⁸ each independently represent a hydrogen atom, a halogen atom, a hydrocarbon group having 1 to 12 carbon atoms and optionally having a substituent, or an alkoxy group having 1 to 12 carbon atoms and optionally having a substituent; R⁹ represents a hydrogen atom, a hydrocarbon group having 1 to 12 carbon atoms and optionally having a substituent, or a silyl group represented by -SiR^{d}R^{e}R^{f}; R^{d} to R^{f} each independently represent a hydrogen atom, a halogen atom, a hydrocarbon group having 1 to 12 carbon atoms and optionally having a substituent, or an alkoxy group having 1 to 12 carbon atoms and optionally having a substituent; Y represents a hydrogen atom, a halogen atom, a hydrocarbon group having 1 to 12 carbon atoms and optionally having a substituent, an alkoxy group having 1 to 12 carbon atoms and optionally having a substituent, a group represented by -NR^{g}-SiR^{h}RⁱR^{j}, or a group represented by -NR^{g}-H; R^{g} represents a hydrogen atom, or a hydrocarbon group having 1 to 12 carbon atoms and optionally having a substituent; R^{h} to R^{j} each independently represent a hydrogen atom, a halogen atom, a hydrocarbon group having 1 to 12 carbon atoms and optionally having a substituent, or an alkoxy group having 1 to 12 carbon atoms and optionally having a substituent; and R⁹ and R^{g} are optionally bound to each other to form a ring.

2. The nonaqueous electrolytic solution according to claim 1, wherein the content of the compound represented by Formula (A) is 1.0 × 10⁻³% by mass to 10% by mass with respect to a total amount of the nonaqueous electrolytic solution.

3. The nonaqueous electrolytic solution according to claim 1 or 2, wherein the content of the compound represented by Formula (α) is 0.01 ppm by mass to 0.5% by mass with respect to a total amount of the nonaqueous electrolytic solution.

4. The nonaqueous electrolytic solution according to any one of claims 1 to 3, wherein a mass ratio of the content of the compound represented by Formula (A) with respect to the content of the compound represented by Formula (α) in the nonaqueous electrolytic solution is 1.0 to 10,000.

5. The nonaqueous electrolytic solution according to any one of claims 1 to 4, wherein the compound represented by Formula (A) is a compound represented by Formula (A') or a compound represented by Formula (A''): 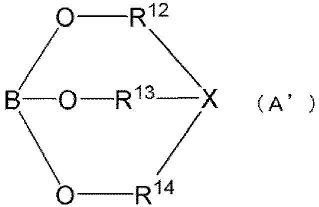 wherein, R¹² to R¹⁴ each independently represent an alkylene group having 1 to 10 carbon atoms and optionally having a substituent; and X^{a} represents an at least trivalent or pentavalent heteroatom, 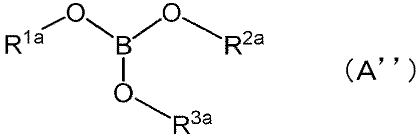 wherein, R^{1a} to R^{3a} each independently represent a hydrocarbon group having 1 to 10 carbon atoms and optionally having a heteroatom, or a trialkylsilyl group optionally having a substituent; and at least one of R^{1a} to R^{3a} is a heteroatom-containing hydrocarbon group having 1 to 10 carbon atoms, or a trialkylsilyl group optionally having a substituent.

6. The nonaqueous electrolytic solution according to any one of claims 1 to 5, wherein the compound represented by Formula (A) is triethanolamine borate or tris(trimethylsilyl) borate.

7. A nonaqueous electrolytic solution battery, comprising:
a positive electrode;
a negative electrode; and
a nonaqueous electrolytic solution,
wherein the nonaqueous electrolytic solution is the nonaqueous electrolytic solution according to any one of claims 1 to 6.
